# FASCICULE DE BREVET EUROPEEN

(11) **EP 2 164 855 B1**
(45) Date de publication et mention de la délivrance du brevet: **19.06.2013**
(21) Numéro de dépôt: 08827999.7
(22) Date de dépôt: 03.07.2008
(51) Int. Cl.: C07F 19/00, C07F 17/00, C07F 5/00, C07F 7/00, C08F 4/642, C08F 4/643, C08F 10/00

(54) **NOUVEAUX COMPLEXES ET PROCEDE DE SYNTHESE D'ORGANOMETALLIQUES DU GROUPE 4 GREFFES SUR ANIONS. PROCEDE D'OLIGOMERISATION ET DE POLYMERISATION DES OLEFINES**
NEUE KOMPLEXE UND VERFAHREN ZUR SYNTHESE VON AUF ANIONEN AUFGEPFROPFTEN GRUPPE-4-ORGANOMETALLEN. VERFAHREN ZUR OLIGOMERISATION UND POLYMERISATION VON OLEFINEN
NOVEL COMPLEXES AND METHOD FOR SYNTHESIS OF GROUP 4 ORGANOMETALLICS GRAFTED ON ANIONS. METHOD FOR OLIGOMERISATION AND POLYMERISATION OF OLEFINS

(30) Priorité: 05.07.2007 FR 0704935
(43) Date de publication de la demande: 24.03.2010
(73) Titulaire: IFP Energies nouvelles, 92852 Rueil-Malmaison Cedex (FR)
(72) Inventeur: BIBAL, Christine, 81100 Castres (FR); SANTINI, Catherine, F-39660 Collonges au Mont d'Or (FR); CHAUVIN, Yves, F-78230 Le Pecq (FR); OLIVIER-BOURBIGOU, Hélène, F-69230 Saint Genis Laval (FR); VALLEE, Christophe, 38360 Sassenage (FR)
(86) Numéro de dépôt international: PCT/FR2008/000954
(87) Numéro de publication internationale: WO 2009/024675

(56) Documents cités:
- WO-A-2005/090373
- FR-A- 2 829 133
- US-A1- 2005 215 738
- RODRIGUEZ-DELGADO A ET AL: "Ligand exchange and abstraction reactions involving titanium isopropoxide with tris(pentafluorophenyl)borane and -alane: ramifications for ring-opening polymerization of propylene oxide" INORGANICA CHIMICA ACTA, ELSEVIER BV, NL, vol. 357, no. 13, 1 novembre 2004 (2004-11-01), pages 3911-3919, XP004608573 ISSN: 0020-1693
- MANDAL SWADHIN K ET AL: "Synthesis, Structural Characterization, and Theoretical Investigation of Compounds Containing an Al-O-M-O-Al (M = Ti, Zr) Core" INORGANIC CHEMISTRY, AMERICAN CHEMICAL SOCIETY. EASTON.; US, vol. 46, no. 18, 1 janvier 2007 (2007-01-01), pages 7594-7600, XP002463678 ISSN: 0020-1669
- GURUBASAVARAJ PRABHUODEYARA M ET AL: "Synthesis, Structural Characterization, Catalytic Properties, and Theoretical Study of Compounds Containing an Al-O-M (M = Ti, Hf) Core" INORGANIC CHEMISTRY, AMERICAN CHEMICAL SOCIETY. EASTON.; US, vol. 46, no. 4, 1 janvier 2007 (2007-01-01), pages 1056-1061, XP002463679 ISSN: 0020-1669
- WANG X ET AL: "Polyoxometalates supporting cyclopendienylzirconium CpZrXW11O39n-: a new kind of olefin polymerization catalyst" INORGANIC CHEMISTRY COMMUNICATIONS, ELSEVIER, AMSTERDAM, NL, vol. 8, no. 1, 1 janvier 2005 (2005-01-01), pages 70-71, XP004700263 ISSN: 1387-7003
- CHOUKROUN R ET AL: "Disproportionation of Cationic Zirconium Complexes: A Possible Pathway to the Deactivation of Catalytic Cationic Systems" ORGANOMETALLICS, ACS, WASHINGTON, DC, US, vol. 16, 1 janvier 1997 (1997-01-01), pages 5517-5521, XP002463680 ISSN: 0276-7333 cité dans la demande

## Description

### DOMAINE DE L'INVENTION

La présente invention concerne de nouveaux complexes organométalliques du groupe 4 supportés sur anions par l'intermédiaire d'au moins une liaison covalente métal-oxygène. Elle concerne également un procédé de synthèse de ces composés. Elle décrit également un procédé d'oligomérisation ou de polymérisation des oléfines mettant en oeuvre une composition catalytique résultant de la présente invention.

### ART ANTÉRIEUR

Les catalyseurs organométalliques homogènes sont utilisés industriellement pour l'oligomérisation et la polymérisation des oléfines. Par exemple, le procédé Dimersol® de dimérisation des oléfines légères ou le procédé Alphabutol® de dimérisation sélective de l'éthylène utilisent des catalyseurs homogènes respectivement à base de nickel ou de titane.
Ces catalyseurs organométalliques possèdent en général une grande activité et une excellente sélectivité qui résultent de l'unicité du site actif et du contrôle de la sphère de coordination du métal.

En dépit de ces avantages, ces catalyseurs sont susceptibles de se désactiver par interaction des espèces organométalliques en solution, via des mécanismes de dismutation ou de formation d'espèces polynucléaires (Organometallics, 1997, 5517-5521). Ces interactions sont favorisées par l'absence de répulsion entre les centres métalliques. Par ailleurs, le recyclage des catalyseurs homogènes et/ou leur séparation des produits de réaction sont généralement des points délicats des procédés homogènes.

La chimie organométallique de surface a été développée pour pallier ces inconvénients (Angew. Chem. Inter. Ed. 2003, 42, 156-181). Les catalyseurs homogènes greffés sur une surface oxyde sont recyclables et les centres métalliques, ancrés sur la surface, ne sont pas susceptibles d'interagir entre eux. Cependant cette méthodologie souffre de l'hétérogénéité des sites de surface d'un solide qui entraîne une multiplicité de sites actifs (J. Am. Chem. Soc. 2006, 128, 9361-9370). Il est de plus difficile de contrôleur la teneur en métal du solide obtenu ou de modifier l'environnement du métal afin de faire varier ses propriétés en catalyse.

Une équipe de l'université de Göttingen a décrit la polymérisation de l'éthylène catalysée par des complexes µ-oxo-hétérobimétalliques possédant des liaisons Al-O-M, où M est un métal du groupe 4 (Inorg. Chem. 2007, 46, 1056-1061; Inorg. Chem. 2007, 46, 7594; WO 2005/090373). Cependant, ces complexes sont des entités neutres et les interactions entre les centres catalytiques en solution ne sont donc pas limitées par répulsion de charges.
D1 Inorganica Chimica Acta, 2004, 357(13), 3911-9.
D2 Inorg. Chem., 2007, 46(18), 7594-600.
D3 Inorg. Chem., 2007, 46(4), 1056-61.
D4 WO 2005/090373 A (UNIV GOETTINGEN [DE]) 29 sept. 2005
D5 Inorg. Chem. Comm., 2005, 8, 70-1.
D6 Organomet., 1997, 16, 5517-5521.
D7 US 2005/215738 A1 (GOODALL BRIAN L [US) 29 sept. 2005
D8 FR 2 829 133 A (INST FR DU PETROLE [FR]) 7 mars 2003

Le document D1 décrit un catalyseur utilisé pour la polymérisation de l'oxyde de propylène, obtenu en mélangeant in situ un précurseur du Ti (IV) avec un acide de Lewis B(C₆F₅)₃. L'intermédiaire réactionnel 4 décrit au-schéma 4 est un composé dans lequel la charge positive est localisée sur l'ion métallique (Ti), l'oxygène portant de plus un radical organique R. Aucun cation Q⁺ indépendant du complexe organométallique n'est décrit. Le document D1 diffère de la présente invention en ce qu'il ne décrit pas une espèce possédant une liaison covalente métal-oxygène permettant le greffage sur une espèces anionique et en ce que la charge (+) (compensant la charge de l'anion centrée sur M') n'est pas centrée sur M mais sur un cation indépendant. De plus A est un anion de forme R₅R₆R₇M'⁽⁻⁾OH⁺Q⁺ et non de forme R₅R₆R₇M'OH.

Les documents D2 à D4 décrivent des composés comprenant des liaisons Al-O-M ou Al-O-M-O-Al, dans lequel le métal M est le titane ou le zirconium. Ces complexes bimétalliques sont utilisables comme catalyseurs pour la polymérisation des oléfines. Les documents D2 à D4 diffèrent de la présente invention en ce que les espèces y décrites sont neutres et ne possèdent pas de liaison covalente métal-oxygène greffée sur une espèce anionique et en ce que la charge (+) (compensant la charge de l'anion centrée sur M') n'est pas centrée sur M mais sur un cation indépendant. De plus A est un anion de forme R₅R₆R₇M'⁽⁻⁾OH⁺Q⁺ et non de forme R₅R₆R₇M'OH.

Le document D5 décrit le greffage d'un composé organométallique sur un polyanion, en vue d'obtenir un catalyseur de polymérisation des oléfines. L'environnement du métal est très différent de celui existant dans les complexes organométalliques supportés sur anions tels que décrits dans la présente invention. Le document D5 diffère de la présente invention en ce que les substituants placés autour de l'atome de bore sont inorganiques alors que dans notre cas, les radicaux R5 à R7 sont des radicaux organiques comprenant de 1 à 30 atomes de carbone.

Le document D6 décrit des complexes cationiques du zirconium. L'anion décrit est un borane. Le document D6 ne décrit aucun composé possédant une liaison Zr-O-B. L'anion est complètement "détaché" du zirconium. Il s'agit donc d'un complexe cationique associé à un anion borane sans greffage réel, contrairement à notre invention où le composé organométallique est greffé sur un anion.

Le document D7 décrit un catalyseur de polymérisation des oléfines, comprenant un centre métallique éventuellement du groupe 4, avec au moins un ligand chelatant. La structure des composés organométalliques décrite dans D7 ne correspond à aucune des formules générale 1 et n.

Le document D8 décrit un procédé d'alkylation des oléfines par des isoparaffines utilisant comme catalyseur et comme solvant une composition comprenant un acide de Bronsted dissous dans un liquide ionique Q⁺A⁻. Les anions décrits dans ce document sont des tétrafluoro- ou tétraalkyles-borates. Aucun des composés décrits dans ce document ne comporte de liaison B-OH telle que celle existant dans le composé A de la présente invention.

Nous avons découvert que le greffage de composés organométalliques sur un anion par l'intermédiaire d'au moins une liaison covalente métal-oxygène permettait de dépasser ces limitations. L'espèce formée possède ainsi un caractère anionique ce qui présente plusieurs avantages:
- les interactions des centres métalliques en solution sont donc réduites, du fait de la répulsion des charges, et
- l'entité formée est soluble dans les solvants ioniques, ce qui ouvre la possibilité de son immobilisation et de son recyclage dans une technologie biphasique.

### DESCRIPTION DÉTAILLÉE DE L'INVENTION

La présente invention décrit des composés organométalliques du groupe 4, supportés sur anions par l'intermédiaire d'au moins une liaison covalente métal-oxygène, de formule générale **I** ou **II.**

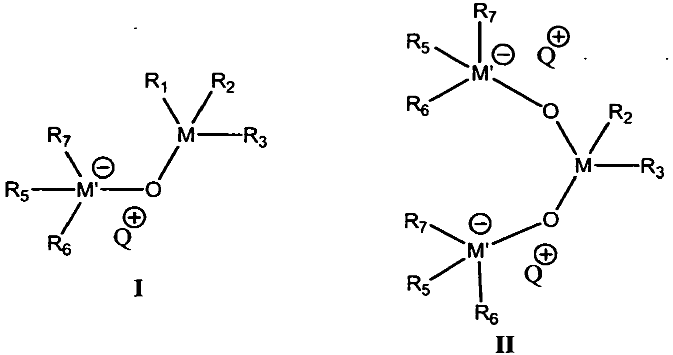

Ces produits sont obtenus par la réaction d'au moins un composé de type borate ou aluminate (**A**) comportant au moins un groupement hydroxy, avec au moins un composé d'un métal de transition du groupe 4 (**B**).

La présente invention décrit également un mélange de composés organométalliques du groupe 4 supportés sur anions par l'intermédiaire d'au moins une liaison covalente métal-oxygène, obtenus par réaction entre au moins un composé A avec au moins un composé B.
La présente invention décrit un procédé de synthèse de composés organométalliques du groupe 4 supportés sur anions par l'intermédiaire d'au moins une liaison covalente métal-oxygène, obtenus en faisant réagir au moins un composé A avec au moins un composé B.

La présente invention décrit également une composition catalytique comportant:
- au moins un composé de type borate ou aluminate **A** comportant au moins un groupement hydroxy ,
- avec au moins un composé d'un métal de transition du groupe 4 noté **B**,
- au moins un agent activateur,
- et optionnellement un solvant.

La présente invention décrit également une composition catalytique résultant de la mise en contact de:
- au moins un composé organométallique du groupe 4, supporté sur anions de formule générale **I** ou **II,** supporté sur anions par l'intermédiaire d'au moins une liaison covalente métal-oxygène,
- avec au moins un agent activateur,
- et optionnellement un solvant.

La présente invention décrit également un procédé d'oligomérisation ou de polymérisation des oléfines mettant en oeuvre lesdites compositions catalytiques.

La présence de la liaison covalente métal-oxygène est mise en évidence dans la présente invention par les techniques d'analyses spectroscopiques couramment connues et utilisées par l'homme du métier (RMN du proton, du carbone, du fluor et du bore, spectrométrie de masse et spectrométrie IR).

### Le composé A

Selon la présente invention, le composé de type borate ou l'aluminate **A** comportant au moins un groupement hydroxy peut être décrit par la formule générale: 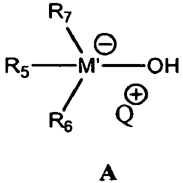 dans laquelle M' représente le bore ou l'aluminium, Q⁺ représente un cation organique ou inorganique. R₅, R₆, R₇ identiques ou différents, représentent des radicaux organiques, ayant de 1 à 30 atomes de carbone, par exemple des groupements alkyles, saturés ou non saturés, cycloalkyles ou aromatiques, aryles ou aralkyles, éventuellement substitués.

R₅, R₆ et R₇, identiques ou différents, peuvent également représenter des radicaux hydrocarbyles dans lesquels un ou plusieurs atomes d'hydrogène sont remplacés par des halogénures ou des groupements comportant au moins un hétéroélément tel que un oxygène, un azote, un soufre ou un silicium.

R₅, R₆ et R₇, identiques ou différents, peuvent également représenter des groupements alcoxy, aryloxy ou amidure.

De façon préférée, R₅, R₆ et R₇ représentent les radicaux pentafluorophényle ou 3,5-(bistrifluorométhyl)phényle.

De façon préférée, le cation **Q⁺** est un cation organique. Il est de préférence choisi parmi le groupe des phosphonium, ammonium, guanidinium et/ou sulfonium.

Dans les formules ci-après, X¹, X², X³, X⁴, X⁵ et X⁶ représentent l'hydrogène, de préférence un seul substituant représentant l'hydrogène, ou des radicaux hydrocarbyles ayant de 1 à 30 atomes de carbone, par exemple des groupements alkyles, saturés ou non saturés, cycloalkyles ou aromatiques, aryles ou aralkyles, éventuellement substitués.

De façon très préférée, X¹, X², X³, X⁴, X⁵ et X⁶ représentent des radicaux hydrocarbyles ayant de 1 à 30 atomes de carbone, par exemple des groupements alkyles, saturés ou non saturés, cycloalkyles ou aromatiques, aryles ou aralkyles, éventuellement substitués.

Les cations sulfonium et guanidinium répondent de préférence à l'une des formules générales SX¹X²X³⁺ ou C(NX¹X²)(NX³X⁴)(NX⁵X⁶)⁺ où X¹, X², X³, X⁴, X⁵ et X⁶, identiques ou différents, sont définis comme précédemment.

Les cations **Q⁺** ammonium et/ou phosphonium quaternaires répondent de préférence à l'une des formules générales NX¹X²X³X⁴⁺ et PX¹X²X³X⁴⁺, ou à l'une des formules générales X¹X²N=CX³X⁴⁺ et X¹X²P=CX³X⁴⁺ dans lesquelles X¹, X², X³ et X⁴, identiques ou différents, sont définis comme précédemment.

Les cations ammonium et/ou phosphonium peuvent également être dérivés d'hétérocycles azotés et/ou phosphorés comportant 1, 2 ou 3 atomes d'azote et/ou de phosphore, de formules générales : 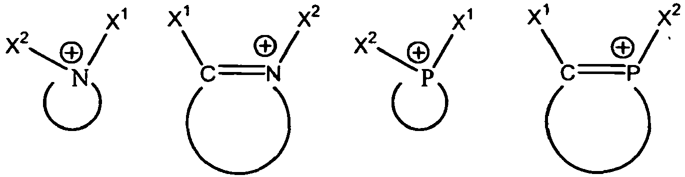 dans lesquelles les cycles sont constitués de 4 à 10 atomes, de préférence 5 à 6 atomes, et X¹ et X², identiques ou différents, sont définis comme précédemment.

Le cation ammonium ou phosphonium quaternaire peut en outre répondre à l'une des formules générales: X¹X²⁺N=CX³-X⁷-X³C=N⁺X¹X² et X¹X²⁺P=CX³-X⁷-X³C=P⁺X¹X² dans lesquelles X¹, X² et X³, identiques ou différents, sont définis comme précédemment, et X⁷ représente un radical alkylène ou phénylène.

Parmi les groupements X¹, X², X³ et X⁴, on mentionnera les radicaux méthyle, éthyle, propyle, isopropyle, butyle primaire, butyle secondaire, butyle tertiaire, butyle, amyle, phényle ou benzyle ; X⁷ pourra être un groupement méthylène, éthylène, propylène ou phénylène.

A titre d'exemple de composés de type borate ou d'aluminate utilisables dans la présente invention, on peut citer le butyl-3-méthyl-1-imididazolium tris-pentafluorophényl-hydroxyborate, le 1-butyl-2,3-diméthymimidazolium tris-pentafluorophényl-hydroxyborate, le 1-éthyl-3-méthylimidazolium tris-pentafluorophényl-hydroxyborate, le 1-butyl-3-butylimidazolium tris-pentafluorophényl-hydroxyborate, le N, N-butylméthylpyrrolidinium tris-pentafluorophényl-hydroxyborate, le tétrabutylphosphonium tris-pentafluorophényl-hydroxyborate, le tétraphénylphosphonium tris-pentafluorophényl-hydroxyborate, le butyl-3-méthyl-1-imididazolium tris-pentafluorophényl-hydroxyaluminate, le butyl-3-méthyl-1-imididazolium tris-phényl-hydroxyborate, le butyl-3-méthyl-1-imididazolium tris-[3,5-bis(trifluorométhyl)phényl]-hydroxyborate.

Le cation Q⁺ peut être un cation inorganique choisi préférentiellement parmi les groupes 1 ou 2 de la classification périodique (Li, Na, K, Mg ou Ca).

### Le composé du métal de transition B

Selon la présente invention, le composé d'un métal de transition du groupe 4 noté **B** peut être décrit par la formule générale:

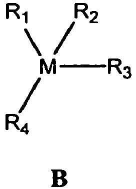

Dans cette formule, M représente le titane, le zirconium ou l'hafnium.
R₁, R₂, R₃ et R₄, identiques ou différents, représentent des halogénures (F, Cl, Br, I), ou des radicaux organiques ayant de 1 à 30 atomes de carbone, préférentiellement des groupements alkyles, cycloalkyles ou aryles, éventuellement substitués, cyclopentadiényles substitués ou non (noté Cp), des groupements alcoxy, aryloxy, amidure, hydrido, carboxylate, oxalate, β-diketiminates, iminopyrrolides, amidinates ou boratabenzène.

De préférence, parmi R₁, R₂, R₃ et R₄, il y a au moins deux radicaux hydrocarbyles, identiques ou différents, choisis de préférence parmi les alkyles, cycloalkyles, aryles ou aralkyles.

Le composé d'un métal de transition du groupe 4 noté **B** peut être de nature monomérique, dimérique ou oligomérique d'un ordre supérieur.

Les adduits des composés de type **B** décrits précédemment avec une base de Lewis sont également utilisables selon la présente invention. Parmi les bases de Lewis utilisables selon la présente invention, on peut citer les éthers, les amines, les thioéthers et les phosphines.

Parmi les exemples de composé de type **B** d'un métal de transition du groupe 4 utilisables selon la présente invention, on peut citer ZrCl₄, Zr(CH₂Ph)₄, Zr(CH₂CMe₃)₄, Zr(CH₂SiMe₃)₄, Zr(CH₂Ph)₃Cl, Zr(CH₂CMe₃)₃Cl, Zr(CH₂SiMe₃)₃Cl, Zr(CH₂Ph)₂Cl₂, Zr(CH₂CMe₃)₂Cl₂, Zr(CH₂SiMe₃)₂Cl₂, Zr(NMe₂)₄, Zr(NEt₂)₄, Zr(NMe₂)₂Cl₂, Zr(NEt₂)₂Cl₂ et Zr(N(SiMe₃)₂)Cl₂, Cp₂ZrMe₂, CpZrMe₃, Cp*ZrMe₃ (Cp*=pentaméthylcyclopentadiényle), HfCl₄, Cp₂HfMe₂, CpHfMe₃, Hf(CH₂Ph)₄, Hf(CH₂CMe₃)₄, Hf(CH₂SiMe₃)₄, Hf(CH₂Ph)₃Cl, Hf(CH₂CMe₃)₃Cl, Hf(CH₂SiMe₃)₃Cl, Hf(CH₂Ph)₂Cl₂, Hf(CH₂CMe₃)Cl₂, Hf(CH₂SiMe₃)₂Cl₂, Hf(NMe₂)₄, Hf(NEt₂)₄ et Hf(N(SiMe₃)₂)₂Cl₂.
Les adduits de ces composés avec des bases de Lewis telles que les éthers, les amines, les thioéthers ou les phosphines sont également utilisables selon la présente invention.

### Les composés organométalliques I et II

Selon la présente invention, les composés organométalliques supportés sur anions par l'intermédiaire d'une liaison covalente métal-oxygène peuvent être décrits par les formules générales **I** où **II** dans lesquelles M, M', R₁, R₂, R₃, R₅, R₆, R₇ et Q⁺ sont définis comme précédemment.

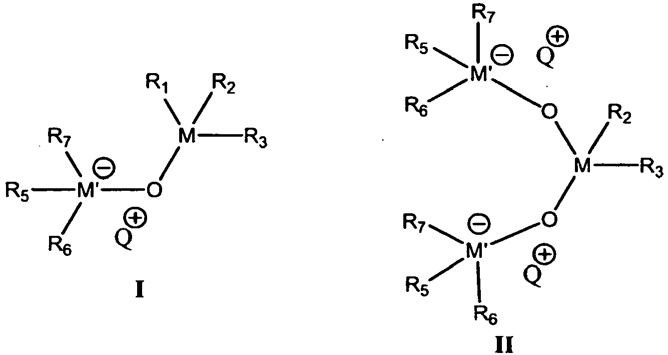

Les adduits des composés organométalliques supportés sur anions avec une base de Lewis sont également utilisables selon la présente invention.

Pour les composés organométalliques supportés sur anions de formule générale **I**, de préférence au moins deux des trois groupes R₁, R₂ et R₃ sont des radicaux hydrocarbyles choisis parmi les groupes alkyles, cycloalkyles, aryles ou aralkyles.

Pour les composés organométalliques supportés sur anions de formule générale **II**, de façon préférée les deux groupes R₂ et R₃ sont des groupes hydrocarbyles choisis parmi les groupes alkyles, cycloalkyles, aryles ou aralkyles.

### Procédé de synthèse des complexes organométalliques I et II

La synthèse de composés organométalliques du groupe 4 supportés sur anions par l'intermédiaire d'au moins une liaison covalente métal-oxygène de formule générale **I** ou **II**, est réalisée par la réaction d'un composé borate ou aluminate **A** comportant au moins un groupement hydroxy, avec un composé **B** d'un métal de transition du groupe 4.

La réaction peut se faire par une simple mise en contact, suivie d'une agitation, du composé **A** avec le composé **B**, optionnellement en présence d'un solvant. L'addition des différents constituants peut se faire dans un ordre quelconque.

De façon préférée, la réaction pourra être réalisée par addition du composé **A** sur le composé **B** dans un solvant.
Le solvant peut être choisi dans le groupe des solvants organiques. Les solvants organiques sont de préférence des solvants aprotiques. Parmi les solvants qui peuvent être utilisés dans le procédé de synthèse selon la présente invention on peut citer les hydrocarbures tels que le pentane, l'hexane, le cyclohexane ou l'heptane, les hydrocarbures aromatiques tels que le benzène, le toluène ou les xylènes, les solvants chlorés tels que le dichlorométhane, ou encore l'acétone, l'acétonitrile, le diéthyléther, le THF, le DMSO et le DMF.
Le solvant utilisé pour la synthèse de **I** est **II** peut également être un liquide ionique. Le liquide ionique sera de préférence constitué d'un cation Q⁺ tel que défini précédemment associé avec un anion organique ou inorganique. Le cation Q⁺ sera de préférence un cation organique. L'anion sera de préférence choisi parmi les anions halogénures, nitrate, sulfate, alkylsulfates, phosphate, alkylphosphates, acétate, halogénoacétates, tétrafluoroborate, tétrachloroborate, hexa-fluorophosphate, trifluoro-tris-(pentafluoroéthyl)phosphate, hexafluoroantimonate, fluorosulfonate, alkylsulfonates (par exemple le méthylsulfonate), perfluoroalkylsulfonates (par exemple le trifluorométhylsulfonate), bis(perfluoroalkylsulfonyl)amidures (par exemple l'amidure de bis trifluorométhylsulfonyle de formule N(CF₃SO₂)₂⁻), le méthylure de tris-trifluorométhylsulfonyle de formule C(CF₃SO₂)₃⁻, le méthylure de bis-trifluorométhylsulfonyle de formule HC(CF₃SO₂)₂⁻, arènesulfonates, éventuellement substitués par des groupements halogènes ou halogénoalkyles, l'anion tétraphénylborate et les anions tétraphénylborates dont les noyaux aromatiques sont substitués, le tétra-(trifluoroacétoxy)-borate, le bis-(oxalato)-borate, le dicyanamide et le tricyanométhylure.
Un mélange de solvants organiques et/ou de liquides ioniques est utilisable pour le procédé de synthèse selon la présente invention.

Le rapport molaire de **A** par rapport à **B** peut être compris entre 0,1/1 et 100/1. De préférence, le rapport molaire sera compris entre 1/1 et 10/1, et de manière encore plus préférée entre 1/1 et 2/1.

La température de la réaction entre **A** et **B** est comprise entre -100 °C et 150 °C, de préférence entre -78 °C et 50 °C.

Les composés **I** ou **II** peuvent être isolés par les méthodes classiques utilisées en chimie de coordination ou en synthèse organique, par exemple par précipitation ou cristallisation dans un ou un mélange de solvants organiques.

La réaction entre A et B conduit à la formation de différents composés dont les composés I est II font partie. A titre d'exemple, il est également possible d'obtenir des composés III ou IV :

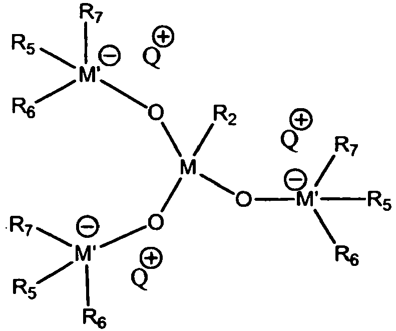

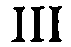

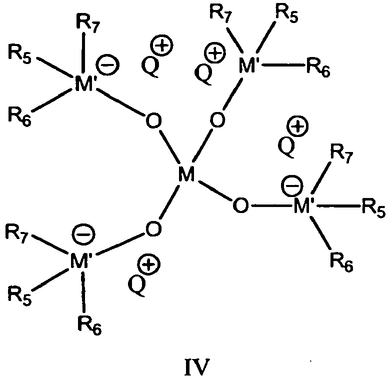

### Procédé d'oligomérisation ou de polymérisation des oléfines

Les composés organométalliques décrits ci-dessus vont maintenant être décrits plus précisément dans le cadre de leur utilisation comme composition catalytique pour un procédé d'oligomérisation ou de polymérisation des oléfines.

Cette composition catalytique comprend les éléments caractéristiques suivants:
i) au moins un composé de type **I** ou **II**,
ii) au moins un agent activateur, et
iii) optionnellement un solvant.

Le système catalytique peut également être généré "in situ" dans le réacteur. La composition catalytique résulte alors de la mise en contact des éléments caractéristiques suivants :
i) au moins un composé **A**,
ii) au moins un composé **B**,
iii) au moins un agent activateur, et
iv) optionnellement un solvant.

### L'agent activateur

L'agent activateur est un composé qui génère une espèce catalytique active. Cet agent activateur peut être mis en contact avec les précurseurs du système catalytique soit "in situ" dans le réacteur catalytique soit "ex-situ" avant injection de la composition catalytique dans le réacteur, les précurseurs du système catalytique étant les composés I ou II, ou les produits issus de la réaction entre au moins un composé A et un composé B.

L'agent activateur peut être un acide de Lewis, un acide de Bronsted, un agent alkylant ou tout composé susceptible de faire l'hydrogénolyse d'une liaison métal-carbone.

L'agent activateur sera de préférence choisi parmi les agents alkylants lorsque les composés **I** est **II** ou le composé **B**, dont ils sont issus, ne comportent pas de liaison métal groupe 4-carbone, c'est à dire lorsque aucun des groupes R₁, R₂, R₃, R₄ n'est un radical hydrocarbyle.

De préférence, l'agent activateur est choisi parmi les dérivés de l'aluminium comme par exemple les aluminoxanes, les organo-aluminium, les halogénures d'aluminium, les aluminates; les dérivés du bore comme par exemple les boranes ou les borates, les dérivés du zinc comme par exemple les organo-zinc; les acides de Bronsted de type H⁺X⁻; l'hydrogène.

A titre d'exemple, les organo-aluminium pouvant être utilisés comme activateurs dans la composition catalytique selon l'invention sont de formule générales AlRₙX'₍₃₋ₙ₎ avec n compris entre 1 et 3, les groupes R, identiques ou différents, étant choisis parmi les groupements alkyles, aryles ou aralkyles ayant de 1 à 12 atomes de carbone et les X', identiques ou différents, étant choisis parmi les halogénures, les alcoxy, les amidures, les carboxylates. Les organo-aluminium seront de préférence choisis dans le groupe des trialkylaluminium ou dans le groupe des chlorure de dialkylaluminium ou dans le groupe des dichlorures d'alkylaluminium.

Les halogénures d'aluminium pouvant être utilisés comme activateurs dans la composition catalytique selon l'invention sont de formule générale AlX₃, dans laquelle X représente de préférence le chlore ou le brome.

Les aluminoxanes pouvant être utilisés comme activateurs dans la composition catalytique sont choisis parmi les alkylaluminoxanes tels que le méthylaluminoxane (MAO) ou l'éthylaluminoxane (EAO) ou parmi les alkylaluminoxanes modifiés tels que le méthylaluminoxane modifié (MMAO).

Les boranes pouvant être utilisés comme activateurs dans la composition catalytique sont choisis de préférence dans le groupe des tris-aryl-boranes dans lequel un ou plusieurs atomes d'hydrogène du noyau aromatique peuvent être remplacés par des halogénures ou des groupements comportant au moins un hétéroélément tel que un oxygène, un azote, un soufre ou un silicium.

De manière préférée, les boranes seront choisis dans le groupe des tris-perfluoroaryl-boranes.

Des boranes présentant deux ou plusieurs sites acides de Lewis tels que décrits dans WO 99/06413 ou J. Am. Chem. Soc. 1999, 121, p3244-3245 sont également utilisables selon la présente invention.

A titre d'exemple de boranes pouvant être utilisés selon la présente invention, on peut citer le tris-pentafluorophényl-borane, le tris-phényl-borane, le tris-[3,5-bis(trifluorométhyl)-phényl]-borane, le tris (2,2',2"-perfluorobiphényl)borane.

Les borates sont choisis de préférence parmi les tetrakis-aryl-borate, tel que le tétraphénylborate, ou les tetrakis-perfluoro-aryl-borate tels que le tetrakis-pentafluoroaryl-borate ou le sel tétrakis-[3,5-bis(trifluorométhyl)phényl]-borate. Les cations des sels borates sont choisis parmi les cations ammonium tel que le triéthylammonium, phosphonium tel que le triphénylphosphonium ou triphénylcarbénium. Le sel tétrakis-[3,5-bis(trifluorométhyl)phényl]-borate (Et₂O)₂H⁺ peut également être utilisé pour la présente invention.
Parmi les sels borates pouvant être utilisés comme agent activateur pour la présente invention se trouvent également les triphénylcarbénium borate, tel que le tetrakis-pentafluorophenyl-borate-triphenylcarbenium [(Ph)₃C]⁺[B(C₆F₅)₄]⁻ comme décrit dans le brevet EP-A-0,427,696. D'autres sels borates associés pouvant être utilisés comme agent activateur pour la présente invention sont décrits dans le brevet EP-A-0,277,004.

Les organo-zinc sont choisis de préférence parmi les composés di-alkyl-zinc.

Les acides de type Bronsted utilisés selon l'invention comme agent activants sont définis comme étant des composés organiques susceptibles de donner au moins un proton. Ces acides ont pour formule H⁺X⁻ dans laquelle X⁻ représente un anion.

Les anions X⁻ sont de préférence choisis parmi les anions tétrafluoroborate, tétraalkylborates, hexafluorophosphates, hexafluoroantimonates, alkylsulfonates (par exemple le méthylsulfonate), perfluorosulfonates (par exemple le trifluorométhylsulfonate), fluorosulfonates, sulfates, phosphates, perfluoroacétates (par exemple le trifluoroacétate), perfluorosulfonamides (par exemple l'amidure de bis-trifluorométhanesulfonyle de formule N(CF₃SO₂)₂⁻), fluorosulfonamides, perfluoro-sulfométhides (par exemple le méthylure de tris-trifluorométhanesulfonyle de formule C(CF₃SO₂)₃⁻), carboranes, tétraphénylborates et les anions tétraphénylborates dont les noyaux aromatiques sont substitués.

Les acides H⁺X⁻ utilisés selon l'invention peuvent être utilisés seuls ou en mélange.

Il est possible d'utiliser pour la présente invention un mélange de plusieurs agents activateurs tels que définis précédemment.

### Le procédé d'oligomérisation ou de polymérisation des oléfines

Le procédé d'oligomérisation ou de polymérisation des oléfines selon la présente invention met en oeuvre de façon optionnelle un solvant.

Le solvant peut être choisi dans le groupe des solvants organiques et des liquides ioniques.

Le solvant organique sera de préférence un solvant aprotique. Parmi les solvants qui peuvent être utilisés dans le procédé selon la présente invention on peut citer les hydrocarbures tels que le pentane, l'hexane, le cyclohexane ou l'heptane, les hydrocarbures aromatiques tels que le benzène, le toluène ou les xylènes, les solvants chlorés tels que le dichlorométhane, ou encore l'acétone, l'acétonitrile, le diéthyléther, le THF, le DMSO et le DMF. Le solvant organique sera de préférence un solvant hydrocarbure ou hydrocarbure aromatique.

Le liquide ionique sera de préférence constitué d'un cation **Q⁺** tel que défini précédemment associé avec un anion organique ou inorganique. Le cation Q⁺ sera de préférence un cation organique. L'anion sera de préférence choisi parmi les anions halogénures, nitrates, sulfates, alkylsulfates, phosphates, alkylphosphates, acétates, halogénoacétates, tétrafluoroborates, tétrachloroborates, hexafluorophosphates, trifluoro-tris-(pentafluoroéthyl)phosphates, hexafluoroantimonates, fluorosulfonates, alkylsulfonates (par exemple le méthylsulfonate), perfluoroalkylsulfonates (par exemple le trifluorométhylsulfonate), bis(perfluoroalkylsulfonyl)amidures (par exemple l'amidure de bis trifluorométhylsulfonyle de formule N(CF₃SO₂)₂⁻), le méthylure de tris-trifluorométhylsulfonyle de formule C(CF₃SO₂)₃⁻, le méthylure de bis-trifluorométhylsulfonyle de formule HC(CF₃SO₂)₂⁻, arènesulfonates, éventuellement substitués par des groupements halogènes ou halogénoalkyles, l'anion tétraphénylborate et les anions tétraphénylborates dont les noyaux aromatiques sont substitués, le tétra-(trifluoroacétoxy)-borate, le bis-(oxalato)-borate, le dicyanamide et le tricyanométhylure.

Un mélange de solvants organiques et/ou de liquides ioniques est utilisable pour le procédé d'oligomérisation ou de polymérisation selon la présente invention.

Dans la composition catalytique de la présente invention, le rapport molaire de [**I** ou **II**] et de l'agent activateur est compris entre 1/10000 et 100/1, de préférence entre 1/500 et 1/1.

Dans la composition catalytique de la présente invention, le rapport molaire de [**I** ou **II**] et de l'agent activateur est de préférence compris entre 1/50 et 1/1, et de façon encore plus préférée entre 1/2 et 1/1, lorsque l'agent activateur est un acide de Lewis, un acide de Bronsted ou tout composé susceptible de réaliser l'hydrogénolyse d'une liaison métal-carbone de [**I** ou **II**], pour les composés organométalliques de formule générale **I**, dont au moins deux des trois groupes R₁, R₂ et R₃ sont des radicaux hydrocarbyles, et pour les composés organométalliques de formule générale **II**, dont les deux groupes R₂ et R₃ sont des radicaux hydrocarbyles, les radicaux hydrocarbyles étant de préférence des groupes alkyles, cycloalkyles, aryles ou aralkyles.

Dans la composition catalytique de la présente invention, le rapport molaire de [**I** ou **II**] et de l'agent activateur est de préférence compris entre 1/2000 et 1/1, et de façon encore plus préférée entre 1/500 et 1/1, lorsque l'agent activateur est un agent alkylant.

Dans la composition catalytique de la présente invention, le rapport molaire de **B** et de l'agent activateur est compris entre 1/10000 et 100/1, de préférence entre 1/500 et 1/1.

Dans la composition catalytique de la présente invention, le rapport molaire de **B** et de l'agent activateur est de préférence compris entre 1/50 et 1/1, et de façon encore plus préférée entre 1/2 et 1/1, lorsque l'agent activateur est un acide de Lewis, un acide de Bronsted ou tout composé susceptible de réaliser hydrogénolyse d'une liaison métal-carbone de **B**, pour les composés organométalliques de formule générale **B**, dont au moins trois des quatre groupes R₁, R₂, R₃ et R₄ sont des radicaux hydrocarbyles, de préférence choisis parmi les groupes alkyles, cycloalkyles, aryles ou aralkyles.

Dans la composition catalytique de la présente invention, le rapport molaire de B et de l'agent activateur est de préférence compris entre 1/2000 et 1/1 et de façon encore plus préférée entre 1/500 et 1/1, lorsque l'agent activateur est un agent alkylant.

Dans la composition catalytique de la présente invention, le rapport molaire de A sur B est compris entre 0,1/1 et 100/1. De préférence, le rapport molaire de A sur B sera compris entre de 1/1 et 10/1, et de manière encore plus préférée entre 1/1 et 2/1.

Les composés entrant dans la composition catalytique selon l'invention peuvent être mélangés dans un ordre quelconque. Le mélange peut se faire par une simple mise en contact suivie d'une agitation jusqu'à formation d'un liquide homogène. Ce mélange peut être fait en dehors du réacteur d'oligomérisation ou de polymérisation ou, de préférence, dans ce réacteur.

Le procédé selon la présente invention est particulièrement utile pour la dimérisation, la co-dimérisation, l'oligomérisation ou la polymérisation des oléfines.

Les oléfines susceptibles d'être transformées par les compositions catalytiques selon l'invention sont plus particulièrement l'éthylène, le propylène, les n-butènes et les n-pentènes, seules ou en mélange (co-dimérisation), pures ou diluées par un alcane, telles qu'on les trouve dans des « coupes » issues des procédés de raffinage du pétrole, comme le craquage catalytique ou le craquage a la vapeur.

La réaction catalytique de transformation des oléfines peut être conduite en système fermé, en système semi-ouvert ou en continu, avec un ou plusieurs étages de réaction. Une vigoureuse agitation doit assurer un bon contact entre le ou les réactifs et la composition catalytique.

La température de réaction peut être de -40 à +250°C, de préférence de 0°C à +150 °C.

La chaleur engendrée par la réaction peut être éliminée par tous les moyens connus de l'homme du métier. La pression peut varier de la pression atmosphérique à 20 MPa, de préférence de la pression atmosphérique à 10 MPa.
Les exemples suivants illustrent l'invention sans en limiter la portée.

### Abréviations utilisées dans les exemples

BMI⁺ ou BMIM⁺ : 1-butyl-3-méthylimidazolium
BMMI⁺ ou BMMIM⁺ : 1-butyl-2,3-diméthymimidazolium
EMI⁺ ou EMIM⁺ : 1-ethyl-3-méthylimidazolium
BBI⁺ ou BBIM⁺ : 1-butyl-3-butylimidazolium
BMpy⁺ : N, N-butylméthylpyrrolidinium
Bu₄P⁺ : tétrabutylphosphonium
Ph₄P⁺: tétraphénylphosphonium
Cp* : pentaméthylcyclopentadiényle
Cp : cyclopentadiényle
NTf₂⁻ : l'amidure de bis trifluorométhylsulfonyle de formule N(CF₃SO₂)₂

### EXEMPLES

### - Exemples de préparation des composés notés A :

### Exemple 1 : Préparation de [BMIM]⁺[B(C₆F₅)₃OH]⁻:

Une solution de chlorure de 1-butyl-3-methyl imidazolium (80 mg, 0.46 mmol, 1 éq) dans le dichlorométhane (7 mL) est ajoutée goutte à goutte à une solution de B(C₆F₅)₃ (234 mg, 0.46 mmol, 1 éq) dans le dichlorométhane (7 mL) puis le mélange est laissé sous agitation magnétique durant 12h à la température ambiante. Il est ensuite additionné à une suspension de lithium hydroxyde anhydre (13 mg, 0.55 mmol, 1.2 eq) dans le dichlorométhane (4 mL) à la température ambiante. Après 12h d'agitation, le précipité de LiCl est filtré et le solvant évaporé. Le sel d'imidazolium tri-pentafluorophenyl-hydroxy-borate ainsi obtenu est utilisé dans les étapes suivantes de synthèse. Il est caractérisé par RMN du fluor, du proton, du carbone et du bore, par spectrométrie de masse et par spectroscopie IR. On notera en particulier le déplacement chimique en RMN du bore à -4.69 ppm caractéristique de l'anion borate.

### * RMN dans C₆D₆

**RMN ¹⁹F** [282.4 MHz, **C₆D₆**] (δ, ppm) : -135.9 (d, 6F, ³J _{FF} = 21.3 Hz, o-F); -161.7 (t, 3F, ³J _{FF} = 20.7 Hz, p-F); -165.8 (m, 6F, m-F).
**RMN ¹H** [300.1 MHz, **C₆D₆**] (à, ppm): 0.64 (t, 3H, ³J _{HH} = 7.4 Hz, CH₃); 0.75 (sext, 2H, ³J _{HH} = 7.4 Hz, CH₂); 0.94 (quint, 2H, ³J _{HH} = 7.4 Hz, CH₂); 2.09 (s, 1 H, OH); 2.56 (s, 3H, CH₃); 3.04 (t, 2H, ³J _{HH} = 7.4 Hz, CH₂); 5.32 (m, 1H, CH); 5.43 (m, 1 H, CH); 9.19 (s, 1 H, CH).
**RMN ¹³C** [75.5 MHz, **C₆D₆**] (δ, ppm): 13.07 (CH₃); 19.30 (CH₂); 31.63 (CH₂); 34.72 (CH₃); 49.08 (CH₂); 120.42 (CH (BMIM⁺)); 121.84 (CH (BMIM⁺)); 135.72 (CH (BMIM⁺)); 137.57, 137.87, 139.11, 140.90, 147.25, 150.39 (CF).

### *RMN dans CD₂Cl₂

**RMN ¹⁹F** [282.4 MHz, **CD₂Cl₂**] (δ, ppm): -137.0 (d, 6F, ³J _{FF} = 21.3 Hz, o-F); -163.1 (t, 3F, ³J _{FF} = 20.7 Hz, p-F); -167.0 (m, 6F, m-F).
**RMN ¹H** [300.1 MHz, **CD₂Cl₂**] (δ, ppm): 0.92 (t, 3H, ³J _{HH} = 7.4 Hz, CH₃); 1.29 (sext, 2H, ³J _{HH} = 7.4 Hz, CH₂); 1.78 (quint, 2H, ³J _{HH} = 7.4 Hz, CH₂); 1.84 (s, 1H, OH); 3.84 (s, 3H, CH₃); 4.07 (t, 2H, ³J _{HH} = 7.4 Hz, CH₂); 7.21 (m, 2H, CH); 9.45 (s, 1 H, CH).
**RMN¹³C** [75.5 MHz, **CD₂Cl₂**] (δ, ppm): 13.32 (CH₃); 19.71 (CH₂); 32.29 (CH₂); 36.65 (CH₃); 50.47 (CH₂); 122.60 (CH (BMIM⁺)); 123.89 (CH (BMIM⁺)); 135.49 (CF); 136.97 (CH (BMIM⁺)); 137.27, 138.69, 140.47, 146.73, 149.86 (CF).
**RMN ¹¹B** [96.3 MHz, (**CH₂Cl₂, 10% C₆D₆**)] (δ, ppm): **-4.69** (s).
**SM-ESI:** ESI(+) [M = 139, BMIM⁺], [M = 806. [2×BMIM⁺ + B(C₆F₅)₃OH⁻]⁺]; ESI(-) [M = 529, B(C₆F₅)₃OH⁻], [M = 1196, [2×B(C₆F₅)₃OH⁻ + BMIM⁺]⁻].
**IR** [KBr]: v(OH) = 3679 cm⁻¹.

### Exemple 2 : Préparation de [Q]⁺[B(C₆F₅)₃OH]⁻ : anions tri-pentafluorophenyl-hydroxy-borates

Les sels tri-pentafluorophényl-hydroxy-borates associés aux différents cations Q⁺ imidazolium, pyrrolidinium, ou phosphonium ont été préparés avec des rendements quantitatifs selon le même procédé que celui décrit dans l'Exemple 1 pour le sel 1-butyl-3-methyl imidazolium tri-pentafluorophenyl-hydroxy-borate.

Ces composés sont caractérisés par RMN du fluor, du proton, du carbone et du bore, par spectrométrie de masse et par spectroscopie IR.

### - Q⁺= imidazolium : cas de [BMMIM⁺]; [EMIM⁺]; [BBIM⁺] :

### Caractérisation de [BMMIM⁺][B(C₆F₅)₃OH⁻] : Liquide incolore.

**RMN ¹⁹F** [282.4 MHz, **CD₂Cl₂**] (δ, ppm): -136.8 (d, 6F, ³J _{FF} = 21.5 Hz, o-F); -163.7 (t, 3F, ³J _{FF} = 20.3 Hz, p-F); -167.4 (m, 6F, m-F).
**RMN ¹H** [300.1 MHz, **CD₂Cl₂**] (δ, ppm): 0.95 (t, 3H, ³J _{HH} = 7.4 Hz, CH₃); 1.35 (sext, 2H ³J _{HH} = 7.4 Hz, CH₂); 1.67 (s, 1 H, OH); 1.75 (quint, 2H, ³J _{HH} = 7.4 Hz, CH₂); 2.58 (s, 3H, CH₃); 3.78 (s, 3H, CH₃); 4.03 (t, 2H, ³J _{HH} = 7.4 Hz, CH₂); 7.21 (d, 1 H, J _{HH} = 2.1 Hz, CH); 7.27 (d, 1H, ³J _{HH} = 2.1 Hz, CH).
**RMN ¹³C** [75.5 MHz, **CD₂Cl₂**] (δ, ppm): 9.86 (CH₃); 13.41 (CH₃); 19.88 (CH₂); 31.98 (CH₂); 35.76 (CH₃); 49.24 (CH₂); 121.53 (CH (BMMIM⁺)); 123.14 (CH (BMMIM⁺)); 135.32, 137.24, 138.63, 140.48 (CF); 143.80 (C(CH₃) (BMMIM⁺));146.80, 149.96 (CF).
**RMN ¹¹B** [96.3 MHz, (**CH₂Cl₂**, 10% **CD₂Cl₂**)] (δ, ppm): -4.52 (s).
**SM-ESI** : ESI(+) [M = 153, BMMIM⁺]; ESI(-) [M = 529, B(C₆F₅)₃OH⁻].
**IR** [KBr]: v(OH) = 3689 cm⁻¹.

### Caractérisation de [EMIM⁺][B(C₆F₅)₃OH⁻] : Liquide incolore.

**RMN ¹⁹F** [282.4 MHz, CD₂Cl₂] (δ, ppm): -136.7 (d, 6F, ³J _{FF} = 22.1 Hz, o-F); -163.0 (t, 3F, ³J _{FF} = 20.1 Hz, p-F); -167.0 (m, 6F, m-F).
**RMN ¹H** [300.1 MHz, CD₂Cl₂] (8, ppm): 1.48 (t, 3H, ³J _{HH} = 7.4 Hz, CH₃); 1.90 (s, 1H, OH); 3.86 (s, 3H, CH₃); 4.16 (quart, 2H, ³J _{HH} = 7.4 Hz, CH₂); 7.21 (m, 1 H, CH); 7.25 (m, 1H, CH); 9.46 (s, 1H, CH).
**RMN ¹³C** [75.5 MHz, CD₂Cl₂] (δ, ppm): 15.32 (CH₃); 36.57 (CH₃); 45.82 (CH₂); 122.13 (CH (EMIM⁺)); 123.91 (CH (EMIM⁺)); 135.35 (CF); 137.0 (CH (EMIM⁺)); 137.20, 138.63, 140.47, 146.72, 149.88 (CF).
**RMN ¹¹B** [96.3 MHz, (CH₂Cl₂, 10% CD₂Cl₂)] (δ, ppm): **-4.45** (s).
**SM-ESI:** ESI(+) [M = 751, [2×EMIM⁺ + B(C₆F₅)₃OH⁻]⁺];
**ESI(-)** [M = 529, B(C₆F₅)₃OH⁻], [M = 1169, [2×B(C₆F₅)₃OH⁻ + EMIM⁺]⁻].
**IR** [KBr]: v(OH) = 3685 cm⁻¹.

### Caractérisation de [BBIM⁺][B(C₆F₅)₃OH⁻] : Liquide incolore

**RMN ¹⁹F** [282.4 MHz, CD₂Cl₂] (δ, ppm): -136.8 (d, 6F, ³J _{FF} = 21.8 Hz, o-F); -163.2 (t, 3F, ³J _{FF} = 20.3 Hz, p-F); -167.1 (m, 6F, m-F).
**RMN ¹H** [300.1 MHz, CD₂Cl₂] (δ, ppm): 0.93 (t, 6H, ³J _{HH} = 7.5 Hz, CH₃); 1.29 (sext, 4H, ³J _{HH} = 7.5 Hz, CH₂); 1.77 (quint, 4H, ³J _{HH} = 7.5 Hz, CH₂); 1.81 (s, 1 H, OH); 4.09 (t, 4H, ³J _{HH} = 7.5 Hz, CH₂); 7.23 (bs, 1 H, CH); 7.24 (bs, 1 H, CH); 9.47 (s, 1 H, CH).
**RMN ¹³C** [75.5 MHz, CD₂Cl₂] (δ, ppm): 13.35 (CH₃); 19.75 (CH₂); 32.34 (CH₂); 50.35 (CH₂); 122.52 (CH (BBIM⁺)); 135.38 (CF); 136.63 (CH (BBIM⁺)); 137.17, 138.64, 140.43, 146.72, 149.98 (CF).
**RMN ¹¹B** [96.3 MHz, (CH₂Cl₂, 10% CD₂Cl₂)] (δ, ppm): -4.43 (s).
**SM-ESI**: [M = 181, BBIM⁺], [M = 891, [2×BBIM⁺ B(C₆F₅)₃OH⁻]⁺];
ESI(-) [M = 529, B(C₆F₅)₃OH⁻], [M = 1239, [2×B(C₆F₅)₃OH⁻ + BBIM⁺]⁻].
**IR** [KBr]: v(OH) = 3683 cm⁻¹.

### - Q⁺ = pyrrolidinium : cas de [BMpy⁺]

### Caractérisation de [BMpy⁺][B(C₆F₅)₃OH⁻] : Liquide incolore

**RMN ¹⁹F** [282.4 MHz, CD₂Cl₂] (δ, ppm): -136.8 (d, 6F, ³J _{FF} = 21.9 Hz, o-F); -163.5 (t, 3F, ³J FF = 20.0 Hz, p-F); -167.2 (m, 6F, m-F).
**RMN ¹H** [300.1 MHz, CD₂Cl₂] (δ, ppm): 0.98 (t, 3H, ³J _{HH} = 7.7 Hz, CH₃); 1.38 (sext, 2H, ³J _{HH} = 7.7 Hz, CH₂); 1.68 (s, 1H, OH); 1.70 (quint, 2H, ³J _{HH} = 7.7 Hz, CH₂); 2.23 (bs, 4H, CH₂); 3.0 (s, 3H, CH₃); 3.25 (m, 2H, CH₂); 3.44 (m, 4H, CH₂).
**RMN ¹³C** [75.5 MHz, CD₂Cl₂] (δ, ppm): 13.53 (CH₃); 20.02 (CH₂); 22.05 (CH₂); 26.16 (CH₂); 49.19 (CH₃); 65.29 (CH₂); 65.38 (CH₂); 135.27, 137.22, 138.63, 140.40, 146.76, 149.94 (CF). RMN ¹¹B [96.3 MHz, (CH₂Cl₂, 10% CD₂Cl₂)] (δ, ppm): -4.44 (s). SM-ESI:
**ESI(+)** [M = 142, BMpy⁺];
**ESI(-)** [M = 529, B(C₆F₅)₃OH⁻].
**IR [KBr]:** v(OH) = 3688 cm⁻¹.

### - Q⁺ = phosphonium : cas de [Bu₄P⁺]; [Ph₄P⁺]

### Caractérisation de [Bu₄P⁺][B(C₆F₅)₃OH⁻] : Liquide incolore.

**RMN ¹⁹F** [282.4 MHz, CD₂Cl₂] (δ, ppm): -136.8 (d, 6F, ³J FF = 21.7 Hz, o-F); -163.8 (t, 3F, ³J FF = 20.4 Hz, p-F); -167.3 (m, 6F, m-F).
**RMN ¹H** [300.1 MHz, CD₂Cl₂] (δ, ppm): 0.96 (t, 12H, ³J _{HH} = 6.8 Hz, CH₃); 1.44-1.52 (m, 16H, CH₂); 1.64 (s, 1 H, OH); 1.97-2.07 (m, 8H, PCH₂).
**RMN ¹³C** [75.5 MHz, CD₂Cl₂] (δ, ppm): 13.34 (CH₃); 19.01 (d, ¹J _{PC} = 48.0 Hz, PCH₂); 23.73 (d, ²J _{PC} = 4.6 Hz, CH₂); 24.22 (d, ³J _{PC} = 15.1 Hz, CH₂); 135.45, 137.03, 138.71, 140.30, 146.53, 146.90 (CF). RMN ¹¹B [96.3 MHz, CD₂Cl₂] (δ, ppm): -4.50 (s).
**RMN ³¹P** [121.5 MHz, CD₂Cl₂] (δ, ppm): 33.41 (s) (¹J PC = 47.7 Hz, ²J PC = 15.2 Hz).
**SM-ESI: ESI**(+) [M = 259, Bu₄P⁺]; ESI(-) [M = 529, B(C₆F₅)₃OH].
**IR** [KBr]: v(OH) = 3689 cm⁻¹.

### Caractérisation de [Ph₄P⁺][B(C₆F₅)₃OH⁻] : Mousse blanche

**RMN ¹⁹F** [282.4 MHz, CD₂Cl₂] (δ, ppm): -136.6 (d, 6F, ³J FF = 21.8 Hz, o-F); -164.1 (t, 3F, ³J FF = 20.6 Hz, p-F); -167.5 (m, 6F, m-F).
**RMN ¹H** [300.1 MHz, CD₂Cl₂] (δ, ppm): 1.56 (s, 1H, OH); 7.56-7.93 (m, 20H, Ph).
**RMN ¹³C** [75.5 MHz, CD₂Cl₂] (δ, ppm): 117.92 (d, ¹J PC = 88.9 Hz, PC); 130.89 (d, ³J PC = 12.7 Hz, m-CH); 134.74 (d, J PC = 10.3 Hz, o-CH); 136.01 (bs, p-CH); 135.26, 136.99, 138.35, 140.16, 146.73, 149.86 (CF).
**RMN ¹¹B** [96.3 MHz, CD₂Cl₂] (δ, ppm): -4.48 (s).
**RMN ³¹P** [121.5 MHz, CD₂Cl₂] (δ, ppm): 23.43 (s) (¹J PC = 90.6 Hz, ²J PC = 11.3 Hz).
**SM-ESI**: ESI(+) [M = 339, Ph₄P⁺]; ESI(-) [M = 529, B(C₆F₅)₃OH], [M = 1397, [2×B(C₆F₅)₃OH⁻ + Ph₄P⁺]⁻].
**IR** [KBr]: v(OH) = 3693 cm⁻¹.

### - Exemple de composés de type B :

Les composés de type B utilisés par la suite sont :
- Cp₂ZrMe₂
- Cp*ZrMe₃
- Zr(CH₂Ph)₄
Ces complexes sont soit commerciaux soit synthétisés par les méthodes classiques décrites dans la littérature.

### - Exemple de préparation des composés de type I :

### Exemple 3 : Préparation de [BMIM]⁺[Cp₂Zr(Me)OB(C₆F₅)₃]⁻

Le composé A, [BMIM]⁺[B(C₆F₅)₃OH]⁻ (0.54 mmol), tel que préparé dans l'Exemple 1, est mis en solution dans le toluène. La solution est ajoutée goutte à goutte à une solution du composé B, Cp₂ZrMe₂ (0.54 mmol, 137 mg, 1 éq) dans le toluène à - 25°C. La solution jaune résultante est maintenue sous agitation magnétique pendant 2h après son retour à la température ambiante. Puis l'agitation est arrêtée pour permettre la décantation du complexe ionique [BMIM]⁺[Cp₂Zr(Me)OB(C₆F₅)₃]⁻ sous la forme d'une phase rouge inférieure. Celle-ci est isolée après avoir canulé le surnageant jaune contenant le sous-produit Cp₂Zr(Me)OZr(Me)Cp₂.
Le composé de type I [BMIM]⁺[Cp₂Zr(Me)OB(C₆F₅)₃]⁻ isolé est caractérisé par RMN du fluor, du proton, du carbone et du bore et par spectrométrie de masse. La RMN du bore confirme la présence de l'anion borate [-OB(C₆F₅)₃]⁻ : pic caractéristique à - **3,93** ppm. La RMN du proton confirme le caractère neutre du Zr : pic caractéristique Zr-Me à -0,19 ppm.
**RMN ¹⁹F** [282.4 MHz, CD₂Cl₂] (δ, ppm): -133.9 (d, 6F, ³J FF = 22.5 Hz, o-F); -164.4 (t, 3F, ³J FF = 20.8 Hz, p-F); -167.8 (m, 6F, m-F).
**RMN ¹H** [300.1 MHz, CD₂Cl₂] (δ, ppm): -0.19 (s, 3H, Zr-CH₃), 0.97 (t, 3H, ³J HH = 7.6 Hz, CH₃); 1.34 (sext, 2H, ³J HH = 7.6 Hz, CH₂); 1.81 (quint, 2H, ³J HH = 7.6 Hz, CH₂); 3.85 (s, CH₃); 4.1 (t, 2H, ³J HH = 7.6 Hz, CH₂); 5.77 (s, 10H, Cp); 7.15 (s, 2H, CH), 8.17 (s, 1 H, CH).
**RMN ¹³C** [75.5 MHz, CD₂Cl₂] (δ, ppm): 13.39 (CH₃); 17.66 (Zr-CH₃); 19.68 (CH₂); 32.25 (CH₂); 36.66 (CH₃); 50.43 (CH₂); 109.69 (Cp); 122.41 (CH (BMIM⁺)); 123.76 (CH (BMIM⁺)); 135.06, 136.85 (CF), 138.34 (CH (BMIM⁺)); 138.35, 139.92, 146.58, 149.79 (CF).
**RMN ¹¹B** [96.3 MHz, CD₂Cl₂] (δ, ppm): **-3.93** (s).
**SM-ESI:** ESI(+) [M = 139, BMIM⁺]; ESI(-) [M = 763, Cp₂Zr(Me)OB(C₆F₅)₃⁻].

### Exemple 4 : préparation de Q⁺[Cp₂Zr(Me)OB(C₆F₅)₃]⁻ (type I)

Tous les complexes ioniques Q⁺[Cp₂Zr(Me)OB(C₆F₅)₃]⁻ associés aux différents cations imidazolium, pyrrolidinium, ou phosphonium ont été préparés selon le même procédé que celui décrit dans l'Exemple 3 pour le cation Q⁺ = 1-butyl-3-methyl imidazolium avec des rendements de 30 à 40%. Ces composés sont caractérisés par RMN du fluor, du proton, du carbone et du bore et par spectrométrie de masse.

### -Q⁺= imidazolium : cas de [BMMIM⁺]; [EMIM⁺]; [BBIM⁺] :

### Caractérisation de [BMMIM⁺][Cp₂Zr(Me)OB(C₆F₅)₃] de type I

**RMN ¹⁹F** [282.4 MHz, CD₂Cl₂] (δ, ppm): -133.9 (d, 6F, ³J _{FF} = 22.8 Hz, o-F); -164.6 (t, 3F, ³J _{FF} = 20.8 Hz, p-F); -167.9 (m, 6F, m-F).
**RMN ¹H** [300.1 MHz, CD₂Cl₂] (δ, ppm): -0.23 (s, 3H, Zr-CH₃), 0.97 (t, 3H, ³J _{HH} = 7.6 Hz, CH₃); 1.35 (sext, 2H, ³J _{HH} = 7.6 Hz, CH₂); 1.77 (quint, 2H, ³J HH = 7.6 Hz, CH₂); 2.53 (s, CH₃); 3.73 (s, CH₃); 3.99 (t, 2H, ³J _{HH} = 7.6 Hz, CH₂); 5.74 (s, 10H, Cp); 7.12 (s, 2H, CH).
**RMN ¹³C** [75.5 MHz, CD₂Cl₂] (δ, ppm): 9.82 (CH₃); 13.41 (CH₂); 17.52 (Zr-CH₃); 19.89 (CH₂); 31.94 (CH₂); 35.76 (CH₃); 49.27 (CH₂); 109.66 (Cp); 121.52 (CH (BMMIM⁺)); 122.98 (CH (BMMIM⁺)); 135.10, 136.74, 138.37; 139.95 (CF), 143.68 (C(CH₃)(BMMIM⁺)), 146.70, 149.89 (CF).
**RMN ¹¹B** [96.3 MHz, CD₂Cl₂](δ, ppm): -3.97 (s).

### Caractérisation de [EMIM⁺][Cp₂Zr(Me)OB(C₆F₅)₃] : Liquide rouge de type I

**RMN ¹⁹F** [282.4 MHz, CD₂Cl₂] (δ, ppm): -134.0 (d, 6F, ³J _{FF} = 28.5 Hz, o-F); -164.5 (t, 3F, ³J _{FF} = 21.0 Hz, p-F); -167.9 (m, 6F, m-F).
**RMN ¹H** [300.1 MHz, CD₂Cl₂] (δ, ppm): -0.18 (s, 3H, Zr-CH₃), 1.50 (t, 6H, ³J _{HH} = 7.6 Hz, CH₃); 3.84 (s, 3H, CH₃); 4.14 (quart, 4H, ³J _{HH} = 7.6 Hz, CH₂); 5.77 (s, 10H, Cp); 7.16 (s, 1H, CH), 7.20 (s, 1H, CH), 8.67 (s, H, CH).
**RMN ¹³C** [75.5 MHz, CD₂Cl₂] (δ, ppm): 15.19 (CH₃); 17.82 (Zr-CH₃); 36.62 (CH₂); 49.94 (CH₂); 109.80 (Cp); 122.35 (CH (EMIM⁺)); 124.0 (CH (EMIM⁺)); 135.23, 136.99 (CF); 138.44 (CH (EMIM⁺)), 138.71, 140.30, 146.84, 150.02 (CF).
**RMN ¹¹B** [96.3 MHz, CD₂Cl₂] (δ, ppm): -3.92 (s).

### Caractérisation de [BBIM⁺][Cp₂Zr(Me)OB(C₆F₅)₃] : Liquide rouge de type I

**RMN ¹⁹F** [282.4 MHz, CD₂Cl₂] (δ, ppm): -134.0 (d, 6F, ³J _{FF} = 23.9 Hz, o-F); -164.4 (t, 3F, ³J _{FF} = 20.3 Hz, p-F); -167.8 (m, 6F, m-F).
**RMN ¹H** [300.1 MHz, CD₂Cl₂] (δ, ppm): -0.17 (s, 3H, Zr-CH₃), 0.97 (t, 6H, ³J HH = 7.3 Hz, CH₃); 1.35 (sext, 4H, ³J HH = 7.3 Hz, CH₂); 1.82 (quint, 4H, ³J HH = 7.3 Hz, CH₂); 4.1 (t, 4H, ³J HH = 7.3 Hz, CH₂); 5.78 (s, 10H, Cp); 7.19 (s, 2H, CH), 8.33 (s, 1 H, CH).
**RMN ¹³C** [75.5 MHz, CD₂Cl₂] (δ, ppm): 13.31 (CH₃); 17.80 (Zr-CH₃); 19.76 (CH₂); 32.24 (CH₂); 50.53 (CH₂); 109.78 (Cp); 122.73 (CH (BBIM⁺)); 135.03 (CH (BBIM⁺), 135.03 (CF); 136.76, 138.36, 139.93, 146.74, 149.78 (CF).
**RMN ¹¹B** [96.3 MHz, CD₂Cl₂] (δ, ppm): -3.88 (s).

### - Q⁺ = pyrrolidinium : cas de [BMpy⁺]

### Caractérisation de [BMpy⁺][Cp₂Zr(Me)OB(C₆F₅)₃] : Liquide rouge de type I

**RMN ¹⁹F** [282.4 MHz, CD₂Cl₂] (δ, ppm): -134.0 (d, 6F, ³J _{FF} = 25.2 Hz, o-F); -164.7 (t, 3F, ³J _{FF} = 20.2 Hz, p-F); -167.9 (m, 6F, m-F).
**RMN ¹H** [300.1 MHz, CD₂Cl₂] (δ, ppm): -0.22 (s, 3H, Zr-CH₃); 0.96 (t, 3H, ³J _{HH} = 7.5 Hz, CH₃); 1.37 (sext, 2H, ³J _{HH} = 7.5 Hz, CH₂); 1.68 (quint, 2H, ³J _{HH} = 7.5 Hz, CH₂); 2.2 (bs, 4H, CH₂); 3.07 (s, 3H, CH₃); 3.31 (m, 2H, CH₂); 3.49-3.57 (m, 4H, CH₂); 5.74 (s, 10H, Cp).
**RMN ¹³C** [75.5 MHz, CD₂Cl₂] (δ, ppm): 13.64 (CH₃); 17.50 (Zr-CH₃); 20.07 (CH₂); 22.0 (CH₂); 26.11 (CH₂); 48.99 (CH₃); 64.59 (CH₂); 64.86 (CH₂); 109.68 (Cp); 134.99, 136.85, 138.38, 139.99, 146.67, 149.79 (CF).
**RMN ¹¹B** [96.3 MHz, CD₂Cl₂] (δ, ppm): -3.95 (s).

### - Q⁺ = phosphonium : cas de [Bu₄P⁺]; [Ph₄P⁺]

### Caractérisation de [Bu₄P⁺][Cp₂Zr(Me)OB(C₆F₅)₃] : Poudre jaune de type I

**RMN ¹⁹F** [282.4 MHz, CD₂Cl₂] (δ, ppm): -133.9 (d, 6F, ³J _{FF} = 24.3 Hz, o-F); -164.6 (t, 3F, ³J _{FF} = 20.2 Hz, p-F); -167.9 (m, 6F, m-F).
**RMN ¹H** [300.1 MHz, CD₂Cl₂] (δ, ppm): -0.21 (s, 3H, Zr-CH₃); 0.98 (t, 12H, ³J _{HH} = 6.9 Hz, CH₃); 1.46-1.51 (m, 16H, CH₂); 1.93-2.03 (m, 8H, PCH₂); 5.75 (s, 10H, Cp).
**RMN ¹³C** [75.5 MHz, CD₂Cl₂] (δ, ppm): 13.32 (CH₃); 17.58 (Zr-CH₃); 18.99 (d, ¹J _{PC} = 48.3 Hz, PCH₂); 23.70 (d, ²J _{PC} = 4.7 Hz, CH₂); 24.21 (d, ³J _{PC} = 15.5 Hz, CH₂); 109.65 (Cp); 135.12,136.78,138.33,139.99,146.65,149.81 (CF).
**³¹P RMN** [121.5 MHz, CD₂Cl₂] (δ, ppm): 33.40 (s) (¹J _{PC} = 47.6 Hz, ²J _{PC} = 14.9 Hz).
**RMN ¹¹B** [96.3 MHz, CD₂Cl₂] (δ, ppm): -3.95 (s).

### Caractérisation de [Ph₄P⁺][Cp₂Zr(Me)OB(C₆F₅]₃] : Liquide jaune de type I

**RMN ¹⁹F** [282.4 MHz, CD2Cl₂] (δ, ppm): -134.0 (d, 6F, ³J _{FF} = 21.7 Hz, o-F); -164.7 (t, 3F, ³J _{FF} = 20.2 Hz, p-F); -167.9 (m, 6F, m-F).
**RMN ¹H** [300.1 MHz, CD₂Cl₂] (δ, ppm): -0.23 (s, 3H, Zr-CH₃); 5.72 (s, 10H, Cp); 7.56-7.76 (m, 20H, Ph).
**RMN ¹³C** [75.5 MHz, CD₂Cl₂] (δ, ppm): 17.47 (Zr-CH₃); 109.63 (Cp); 117.92 (d, ¹J _{PC} = 90.3 Hz, PC); 130.98 (d, ³J _{PC} = 13.1 Hz, m-CH); 134.76 (d, ²J _{PC} = 10.0 Hz, o-CH); 136.01 (d, ⁴J _{PC} = 2.8 Hz, p-CH); 135.24, 136.73, 138.54, 139.89, 146.65, 149.91 (CF).
**RMN ³¹P** [121.5 MHz, CD₂Cl₂] (δ, ppm): 23.43 (s) (¹J _{PC} = 90.2 Hz, ²J _{PC} = 11.4 Hz).
**RMN ¹¹B** [96.3 MHz, CD₂Cl₂] (δ, ppm): -3.98 (s).

### Exemple 5 : Préparation de [BMIM]⁺[Cp*ZrMe₂OB(C₆F₅)₃]⁻ (type I)

Le composé A [BMIM]⁺[B(C₆F₅)₃OH]⁻ (0.38 mmol), tel que préparé dans l'Exemple 1, est mis en solution dans le toluène. La solution obtenue est ajoutée goutte à goutte à une solution du composé de type B, Cp*ZrMe₃ (0.38 mmol, 102 mg, 1 éq) , dans le toluène à - 25°C. Après retour à la température ambiante, la solution jaune est encore agitée 2h virant au jaune-orangé.
L'analyse par spectroscopie RMN de la solution obtenue révèle la présence du composé attendu [BMIM]⁺[Cp*ZrMe₂OB(C₆F₅)₃]⁻. Le caractère anionique du bore est confirmé par la RMN du bore : pic caractéristique à -4,17 ppm pour l'anion borate [-OB(C₆F₅)₃]⁻. La RMN du proton confirme le caractère neutre du Zr : pic caractéristique Zr-Me à -0,14 ppm.

### Caractérisation de [BMIM]⁺[Cp*ZrMe₂OB(C₆F₅)₃]⁻

**RMN ¹⁹F** [282.4 MHz, C₇D₈] (δ, ppm): -133.9 (d, 6F, ³J _{FF} = 23.3 Hz, o-F); -163.6 (t, 3F, ³J _{FF} = 20.8 Hz, p-F); -167.0 (m, 6F, m-F).
**RMN ¹H** [300.1 MHz, C₇D₈] (δ, ppm): -0.14 (s, 3H, Zr-CH₃), 0.69 (t, 3H, ³J _{HH} = 7.6 Hz, CH₃); 0.81 (sextet, 2H, ³J _{HH} = 7.6 Hz, CH₂), 1.01 (quintet, 2H, ³J _{HH} = 7.6 Hz, CH₂); 1.96 (s, 15H, Cp*(Me)); 2.63 (s, CH₃); 2.99 (t, 2H, ³J _{HH} = 7.6 Hz, CH₂); 5.79 (d, 1H, ³J _{HH} = 2.0 Hz, CH); 5.83 (d, 1H, ³J _{HH} = 2.0 Hz, CH); 6.28 (s, 1 H, CH).
**RMN ¹³C** [75.5 MHz, C₇D₈] (δ, ppm): 10.83 (Cp*(Me)); 13.09 (CH₃); 19.38 (CH₂); 31.55 (CH₂); 35.15 (CH₃), 32.32 (Zr-CH₃); 49.60 (CH₂); 117.99 (Cp*); 121.54 (CH (BMIM⁺)); 123.0 (CH (BMIM⁺)); 135.27, 136.72 (CF), 137.07 (CH (BMIM⁺)); 138.50, 140.09, 146.85, 149.99 (CF).
**RMN ¹¹B** [96.3 MHz, C₇H₈ - C₆D₆] (δ, ppm): -4.17 (s).

### - Exemples de complexes de type II

### Exemple 6 : Préparation de [EMIM]₂²⁺[Zr(CH₂Ph)₂(OB(C₆F₅)₃)₂]²⁻ (type II)

Le composé A, [EMIM]⁺[B(C₆F₅)₃OH]⁻ (0.48 mmol, 2 éq), tel que décrit dans l'Exemple 2, est mis en solution dans le toluène. La solution est ajoutée goutte à goutte à une solution du composé B, Zr(CH₂Ph)₄ (0.24 mmol, 109 mg, 1 eq) dans le toluène, à - 25°C. Après retour à la température ambiante, la solution jaune est encore agitée 2 heures, puis l'agitation est arrêtée pour permettre la décantation du complexe ionique [EMIM]₂²⁺[Zr(CH₂Ph)₂(OB(C₆F₅)₃)_{2]}²⁻, de type B, sous la forme d'une phase jaune inférieure. Rendement : 32%. Le composé [EMIM]₂²⁺[zr(CH₂Ph)₂(OB(C₆F₅)₃)₂]²⁻ est caractérisé par RMN du proton, du carbone, du bore et du fluor. La RMN du bore confirme la présence de l'anion borate [-OB(C₆F₅)₃]⁻ à -4.94 ppm.
**RMN ¹⁹F** [282.4 MHz, CD₂Cl₂] (δ, ppm): -134.8 (d, 6F, ³J _{FF} = 27.5 Hz, o-F); -166.5 (t, 3F, ³J _{FF} = 21.4 Hz, p-F); -169.1 (m, 6F, m-F).
**RMN ¹H** [300.1 MHz, CD₂Cl₂] (δ, ppm): 1.40 (t, 6H, ³J _{HH} = 7.4 Hz, CH₃); 1.66, 1.83 (s, 2H, Zr-CH₂), 3.64 (s, 3H, CH₃); 3.96 (quartet, 4H, ³J _{HH} = 7.4 Hz, CH₂); 6.39-7.30 (m, Ph); 6.99 (m, 1 H, CH), 7.03 (m, 1H, CH), 7.66 (s, 1 H, CH).
**RMN ¹³C** [75.5 MHz, CD₂Cl_{2]} (δ, ppm): 15.01 (CH₃); 36.43 (CH₃); 45.90 (CH₂); 48.91, 55.83 (Zr-CH₂); 122.21 (CH (EMIM⁺)); 124.06 (CH (EMIM⁺)); 134.61 (CH (EMIM⁺)); 125.67-129.70 (Ph); 134.60-149.89 (CF).
**RMN ¹¹B** [96.3 MHz, CD₂Cl₂] (δ, ppm): -4.94 (s).

### - Exemple de réaction du composé de type 1 avec un acide de Lewis :

### Exemple 7 : Préparation de [BBIM]⁺[Cp₂Zr⁺OB⁻(C₆F₅)₃] [MeB(C₆F₅)₃]⁻ :

La réaction du complexe ionique, de type I, [BBIM]⁺[Cp₂Zr(Me)OB(C₆F₅)₃]⁻ (43 mg, 0.045 mmol) tel que préparé dans l'Exemple 4, solubilisé dans le dichlorométhane avec une quantité stoechiométrique de B(C₆F₅)₃ (23 mg, 0.045 mmol) a été étudiée en RMN ¹¹B, ¹⁹F, ¹³C, ¹H. La formation de l'anion [MeB(C₆F₅)₃]⁻ est observée ainsi que celle de plusieurs produits zirconocènes identifiés par leurs résonances Cp (RMN ¹H: 5.96, 6.14, 6.16, 6.34 ; RMN ¹³C : 113.75, 114.01, 114.19, 115.55) et une résonance large en RMN ¹¹B (-2.96 ppm) caractéristique de structures contenant un fragment -OB(C₆F₅)₃⁻. Ces analyses confirment la formation d'un complexe du zirconium cationique du type [BBIM]⁺[Cp₂Zr⁺OB⁻(C₆F₅)₃] [MeB(C₆F₅)₃]⁻.
**caractérisation de l'anion [MeB(C₆F₅)₃]⁻ : RMN ¹⁹F** [282.4 MHz, CD₂Cl₂] (δ, ppm): - 134.2 (m, o-F); -165.7 (m, p-F); -168.1 (m, m-F). **RMN ¹H** [300.1 MHz, CD₂Cl₂] (δ, ppm): 0.48. **RMN ¹³C** [75.5 MHz, CD₂Cl_{2]} (δ, ppm): 10.12. **RMN ¹¹B** [96.3 MHz, CD₂Cl₂] (δ, ppm): -15.35.

### Exemple 8 : Préparation de [Bu₄P]⁺[Cp₂Zr⁺OB⁻(C₆F₅)₃] [MeB(C₆F₅)₃]⁻ dans le liquide ionique [BMpy]⁺[NTf₂]⁻ :

### - Solubilisation du complexe [Bu₄P]⁺[Cp₂Zr(Me)OB(C₆F₅)₃]⁻ dans un liquide ionique :

Dans un tube RMN on solubilise le complexe ionique [Bu₄P]⁺[Cp₂Zr(Me)OB(C₆F₅)₃]⁻ (108 mg, 0.11 mmol) de type I tel que préparé dans l'Exemple 4 dans CD₂Cl₂ (0.7 mL) et on introduit une quantité de liquide ionique [BMpy]⁺[NTf₂]⁻ (0.1 mL). La solubilisation du complexe [Bu₄P]⁺[Cp₂ZrMe)OB(C₆F₅)₃]⁻ dans le milieu est constatée visuellement (solution homogène jaune) et par RMN ¹¹B.
**RMN ¹¹B** [96.3 MHz, CD₂Cl₂] (δ, ppm):
   [Bu₄P]⁺[Cp₂Zr(Me)OB(C₆F₅)₃]⁻ (seul, avant ajout du liquide ionique [BMpy]⁺[NTf₂]⁻ : - 3.95.
   [Bu₄P]⁺[Cp₂Zr(Me)OB(C₆F₅)₃]⁻ avec 0.1 mL du liquide ionique [BMpy]⁺[NTf₂]⁻: -3.94.

### - Réaction du complexe [Bu₄P]⁺[Cp₂Zr(Me)OB(C₆F₅)₃]⁻ avec B(C₆F₅)₃ dans le liquide ionique :

Une quantité stoechiométrique de B(C₆F₅)₃ (54 mg, 0.11 mmol) est ajoutée à la solution du complexe de type I [Bu₄P]⁺[Cp₂Zr(Me)OB(C₆F₅)₃]⁻ (108 mg, 0.11 mmol) dans le mélange CD₂Cl₂ (0.7 mL) / [BMpy]⁺[NTf₂]⁻ (0.1 mL). La réaction est suivie par RMN 11B avec la formation immédiate de l'anion [MeB(C₆F₅)_{3]}⁻ (résonance à - 15.39 ppm). Une autre résonance en RMN ¹¹B à - 3.09 ppm (caractéristique d'un fragment -OB(C₆F₅)₃⁻) est attribuable à un produit majoritaire zirconocène avec une résonance Cp observable en RMN ¹H à 6.19 ppm et en RMN ¹³C à 114.02 ppm. Ce composé est aussi détecté en RMN ¹⁹F par les résonances suivantes : -134.3 (dd, 6F, ³J _{FF} = 9.7 Hz, ³J _{FF} = 9.9 Hz, o-F), -162.9 (t, 3F, ³J _{FF} = 20.4 Hz, p-F), -167.2 (m, 6F, m-F). L'ensemble de ces caractérisations correspondent à la formation du complexe [Bu₄P]⁺[Cp₂Zr⁺OB⁻(C₆F₅)₃] [MeB(C₆F₅)₃]⁻.

### - Exemple de catalyse de transformation de l'éthylène

### Exemple 9 : Polymérisation de l'éthylène avec le complexe de type I [BMIM]⁺[Cp*ZrMe₂OB(C₆F₅)₃]⁻ auquel on a ajouté l'acide de Lewis B(C₆F₅)₃

Dans un autoclave de 250 mL, muni d'une double enveloppe et d'un barreau magnétique, préalablement séché sous vide à 90°C pendant 4 heures, et passivé avec une solution de MAO dans le toluène, on ajoute à 20°C, et sous atmosphère d'éthylène, 50 mL de toluène. On ajoute ensuite le complexe de type I, décrit dans l'Exemple 5, [BMIM]⁺[Cp*ZrMe₂OB(C₆F₅)₃]⁻, (231,4 mg) dans 9 mL de toluène, puis sous agitation, 0,9 équivalent de B(C₆F₅)₃ dans 2 mL de toluène. La pression d'éthylène est fixée à 2 MPa et est maintenue constante dans le réacteur et la température est maintenue à 20°C. L'agitation est poursuivie pendant 300 minutes. On observe une consommation d'éthylène de 22 g. L'agitation est arrêtée, le réacteur est dépressurisé et le volume de gaz sorti est mesuré dans un compteur à gaz. Ce gaz est analysé par chromatographie en phase gaz (GC). A 10°C on soutire du réacteur une phase liquide (37 g) et un solide (17 g) que l'on neutralise par injection d'éthanol (1,5 mL). Le seul produit de la réaction est du polyéthylène.

### Exemple 10 : Polymérisation de l'éthylène avec le complexe de type I [BMIM]⁺(Cp₂ZrMeOB(C₆F₅)₃]⁻ auquel on a ajouté du MAO.

On utilise le même réacteur que dans l'Exemple 9 et dans les mêmes conditions opératoires à ceci près que l'on introduit dans le réacteur le complexe de type I [BMIM]⁺[Cp₂ZrMeOB(C₆F₅)₃]⁻ (130 mg) dans 3 mL de toluène, auquel on ajoute 150 équivalent de méthylaluminoxane (MAO 10% dans le toluène). La pression est fixée à 2 MPa d'éthylène et la température à 20°C. L'agitation est maintenue 15 minutes. On observe une consommation d'éthylène de 10 g. On réalise alors le même traitement que dans l'Exemple 9. L'analyse montre que l'on a formé du polyéthylène (7,5 g).

## Revendications

1. Composé organométallique du groupe 4 supporté sur anion par l'intermédiaire d'une liaison métal-oxygène caractérisé en qu'il répond à la formule générale I ou II 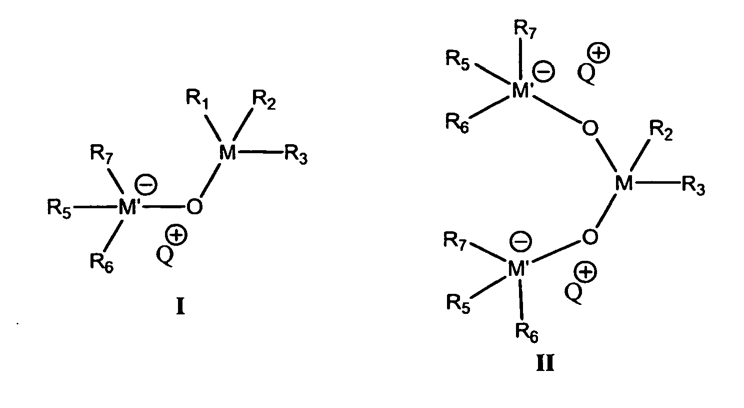 dans lesquelles M représente le titane, le zirconium ou l'hafnium,
M' représente le bore ou l'aluminium,
R₁, R₂, R₃ identiques ou différents, représentent des halogénures ou des radicaux organiques ayant de 1 à 30 atomes de carbone,
R₅, R₆, R₇, identiques ou différents, représentent des radicaux organiques ayant de 1 à 30 atomes de carbone,
et Q⁺ représente un cation organique ou inorganique.

2. Composé selon la revendication 1 dans lequel les groupements R₅, R₆, R₇ identiques ou différents, représentent des radicaux alkyles comprenant de 1 à 30 atomes de carbone, saturés ou non saturés, cycloalkyles ou aromatiques, aryles ou aralkyles, éventuellement substitués, des radicaux hydrocarbyles dans lesquels un ou plusieurs atomes d'hydrogène sont remplacés par des halogénures ou des groupements comportant au moins un hétéroélément choisi parmi les éléments oxygène, azote, soufre ou silicium, des groupements alcoxy, aryloxy ou amidure.

3. Composé selon l'une des revendications 1 ou 2 dans lequel R₁, R₂, et R₃ représentent des groupements alkyles, cycloalkyles ou aryles, éventuellement substitués, cyclopentadiényles substitués ou non, des groupements alcoxy, aryloxy, amidure, hydrido, carboxylate, oxalate, β-diketiminates, iminopyrrolides, amidinates ou boratabenzène.

4. Composé selon l'une des revendications 1 à 3 **caractérisé en ce qu'**il répond à la formule I est que au moins deux des trois groupes R₁, R₂ et R₃ sont des radicaux hydrocarbyles choisis parmi les groupes alkyles, cycloalkyles, aryles ou aralkyles.

5. Composé selon la revendication 1 à 3 **caractérisé en ce qu'**il répond à la formule II et que les deux groupes R₂ et R₃ sont des radicaux hydrocarbyles choisis parmi les groupes alkyles, cycloalkyles, aryles ou aralkyles.

6. Composé selon l'une des revendications 1 à 5 **caractérisé en ce que** le cation Q⁺ répond à l'une des formules générales :
SX¹X²X³⁺ ou C(NX¹X²)(NX³X⁴)(NX⁵X⁺)⁺
ou NX¹X²X³⁺ ou PX¹X²X³⁺
ou X¹X²N=CX³X⁴⁺ ou X¹X²P=CX³X⁴⁺
dans laquelle X¹, X², X³, X⁴, X⁵ et X⁶, identiques ou différents, représentent l'hydrogène, de préférence un seul substituant représente l'hydrogène, ou des radicaux hydrocarbyles ayant de 1 à 30 atomes de carbone.

7. Composé selon l'une des revendications 1 à 5 **caractérisé en ce que** Q⁺ est dérivé d'hétérocycles azotés et/ou phosphorés comportant 1, 2 ou 3 atomes d'azote et/ou de phosphore, de formules générales : 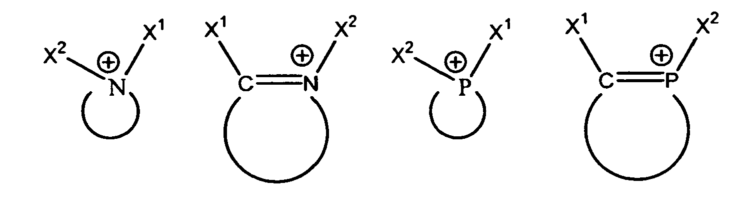 dans lesquelles les cycles sont constitués de 4 à 10 atomes, de préférence 5 à 6 atomes, et X¹ et X², identiques ou différents, représentent l'hydrogène, de préférence un seul substituant représente l'hydrogène, ou des radicaux hydrocarbyles ayant de 1 à 30 atomes de carbone.

8. Mélange de composés organométalliques du groupe 4 supportés sur anion borate ou aluminate par l'intermédiaire d'au moins une liaison covalente métal-oxygène obtenu par la réaction d'au moins un composé A comportant au moins un groupement hydroxy avec au moins un composé B, éventuellement en présence d'un solvant,
le composé A étant décrit par la formule générale 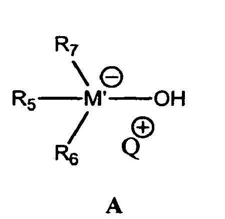 dans laquelle M' représente le bore ou l'aluminium, Q⁺ représente un cation organique ou inorganique, R₅, R₆, R₇ identiques ou différents, représentent des radicaux organiques, ayant de 1 à 30 atomes de carbone,
le composé B étant décrit par la formule générale 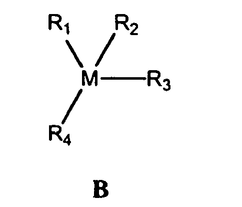 dans laquelle M représente le titane, le zirconium ou l'hafnium, R₁, R₂, R₃ et R₄, identiques ou différents, représentent des halogénures ou des radicaux organiques ayant de 1 à 30 atomes de carbone.

9. Mélange selon la revendication 8 **caractérisé en ce que** le composé A est choisi parmi le butyl-3-méthyl-1-imididazolium tris-pentafluorophényl-hydroxyborate, le 1-butyl-2,3-diméthymimidazolium tris-pentafluorophényl-hydroxyborate, le 1-ethyl-3-méthylimidazolium tris-pentafluorophényl-hydroxyborate, le 1-butyl-3-butylimidazolium tris-pentafluorophényl-hydroxyborate, le N, N-butylméthylpyrrolidinium tris-pentafluorophényl-hydroxyborate, le tétrabutylphosphonium tris-pentafluorophényl-hydroxyborate, le tétraphénylphosphonium tris-pentafluorophényl-hydroxyborate, le butyl-3-méthyl-1-imididazolium tris-pentafluorophényl-hydroxyaluminate, le butyl-3-méthyl-1-imididazolium tris-phényl-hydroxyborate, le butyl-3-méthyl-1-imididazolium tris-[3,5-bis(trifluorométhyl)phényl]-hydroxyborate.

10. Mélange selon l'une des revendications 8 ou 9 **caractérisé en ce que** au moins deux radicaux hydrocarbyles R₁, R₂, R₃ et R₄, identiques ou différents sont choisis parmi les alkyles, cycloalkyles, aryles ou aralkyles.

11. Mélange selon l'une des revendications 8 à 10 **caractérisé en ce que** le composé B est choisi parmi ZrCl₄, Zr(CH₂Ph)₄, Zr(CH₂CMe₃)₄, Zr(CH₂SiMe₃)₄, Zr(CH₂Ph)₃Cl, Zr(CH₂CMe₃)₃Cl, Zr(CH₂SiMe₃)₃Cl, Zr(CH₂Ph)₂Cl₂, Zr(CH₂CMe₃)₂Cl₂. Zr(CH₂SiMe₃)₂Cl₂, Zr(NMe₂)₄. Zr(NEt₂)₄, Zr(NMe₂)₂Cl₂, Zr(NEt₂)₂Cl₂ et Zr(N(SiMe₃)₂)₂Cl₂, Cp₂ZrMe₂, CpZrMe₃, Cp*ZrMe₃ (Cp*=pentaméthylcyclopentadiényle), HfCl₄, Cp₂HfMe₂, CpHfMe₃, Hf(CH₂Ph)₄, Hf(CH₂CMe₃)₄, Hf(CH₂SiMe₃)₄, Hf(CH₂Ph)₃Cl, Hf(CH₂CMe₃)₃Cl, Hf(CH₂SiMe₃)₃Cl, Hf(CH₂Ph)₂Cl₂, Hf(CH₂CMe₃)₂Cl₂, Hf(CH₂SiMe₃)₂Cl₂, Hf(NMe₂)₄, Hf(NEt₂)₄ et Hf(N(SiMe₃)₂)₂Cl₂.

12. Procédé de synthèse de composé selon l'une des revendications 1 à 7 ou de mélange de composés selon l'une des revendications 8 à 11 dans lequel on fait réagir un composé borate ou aluminate **A** comportant au moins un groupement hydroxy, avec un composé **B** d'un métal de transition du groupe 4, éventuellement en présence d'un solvant, dans lequel le composé A est décrit par la formule générale 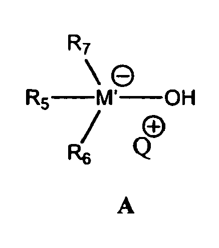 dans laquelle M' représente le bore ou l'aluminium, Q⁺ représente un cation organique ou inorganique, R₅, R₆, R₇ identiques ou différents, représentent des radicaux organiques, ayant de 1 à 30 atomes de carbone, et le composé B est décrit par la formule générale 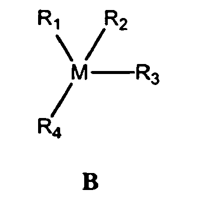 dans laquelle M représente le titane, le zirconium ou l'hafnium, R₁, R₂, R₃ et R₄, identiques ou différents, représentent des halogénures ou des radicaux organiques ayant de 1 à 30 atomes de carbone.

13. Procédé selon la revendication 12 dans lequel le solvant est un solvant organique, de préférence aprotique, ou un liquide ionique, et/ou leurs mélanges.

14. Procédé selon la revendication 12 ou 13 dans lequel le rapport molaire de A par rapport à B est compris entre 0,1/1 et 100/1, de préférence entre 1/1 et 10/1.

15. Procédé selon l'une des revendications 12 à 14 dans lequel la température de réaction est comprise entre -100°C et 150°C, de préférence entre -78°C et 50°C.

16. Composition catalytique comprenant :
i) au moins un composé de formule générale I ou II 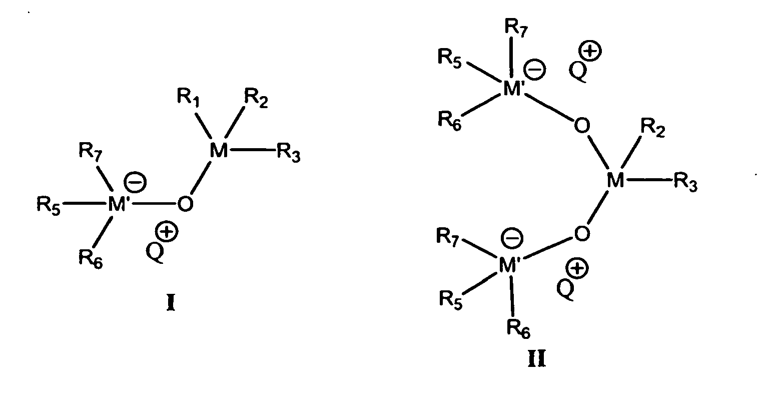 dans lesquelles M représente le titane, le zirconium ou l'hafnium,
M' représente le bore ou l'aluminium,
R₁, R₂, R₃ identiques ou différents, représentent des halogénures ou des radicaux organiques ayant de 1 à 30 atomes de carbone,
R₅, R₆, R₇, identiques ou différents, représentent des radicaux organiques ayant de 1 à 30 atomes de carbone, et Q⁺ représente un cation organique ou inorganique.
ii) au moins un agent activateur
iii) et optionnellement un solvant.

17. Composition catalytique résultant de la mise en contact entre :
i) au moins un composé A de type borate ou aluminate comportant au moins un groupement hydroxy, décrit par la formule générale 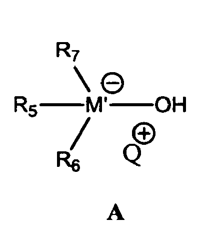 dans laquelle M' représente le bore ou l'aluminium, Q⁺ représente un cation organique ou inorganique, R₅, R₆, R₇ identiques ou différents, représentent des radicaux organiques, ayant de 1 à 30 atomes de carbone,
ii) au moins un composé B d'un métal de transition du groupe 4 décrit par la formule générale 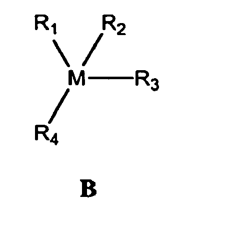 dans laquelle M représente le titane, le zirconium ou l'hafnium, R₁, R₂, R₃ et R₄, identiques ou différents, représentent des halogénures ou des radicaux organiques ayant de 1 à 30 atomes de carbone
iii) au moins un agent activateur
iv) optionnellement un solvant.

18. Composition catalytique selon l'une des revendications 16 ou 17 dans laquelle l'agent activateur est un acide de Lewis, un acide de Bronsted, un agent alkylant ou tout composé susceptible de faire l'hydrogénolyse d'une liaison métal-carbone (M-C).

19. Composition catalytique selon l'une des revendications 16 à 18 dans laquelle l'agent activateur est choisi parmi les aluminoxanes, les organo-aluminium, les halogénures d'aluminium, les aluminates, les boranes, les borates, les organo-zinc, l'hydrogène ou leurs mélanges.

20. Composition catalytique selon l'une des revendications 16 à 19 dans laquelle le solvant est choisi dans le groupe des solvants organiques et des liquides ioniques ou de leurs mélanges.

21. Composition catalytique selon l'une des revendications 16 à 20 dans laquelle le rapport molaire de [I ou II] et de l'agent activateur est compris entre 1/10 000 et 100/1, de préférence entre 1/500 et 1/1.

22. Composition catalytique selon la revendication 21 dans laquelle le rapport molaire de [I ou II] et de l'agent activateur est compris entre est de préférence compris entre 1/50 et 1/1, et de façon encore plus préférée entre 1/2 et 1/1, lorsque l'agent activateur est un acide de Lewis, un acide de Bronsted ou tout composé susceptible de réaliser l'hydrogénolyse d'une liaison métal-carbone de [**I** ou **II**], pour les composés organométalliques de formule générale **I,** dont au moins deux des trois groupes R₁, R₂ et R₃ sont des radicaux hydrocarbyles, et pour les composés organométalliques de formule générale **II**, dont les deux groupes R₂ et R₃ sont des groupes hydrocarbyles, les radicaux hydrocarbyles étant de préférence des groupes alkyles, cycloalkyles, aryles ou aralkyles.

23. Composition catalytique selon la revendication 21 dans laquelle le rapport molaire de [I ou II] et de l'agent activateur est de préférence compris entre 1/2000 et 1/1, et de façon encore plus préférée entre 1/500 et 1/1, lorsque l'agent activateur est un agent alkylant.

24. Composition catalytique selon l'une des revendications 16 à 23 dans laquelle le rapport molaire de B et de l'agent activateur est compris entre 1/10000 et 100/1, de préférence entre 1/500 et 1/1.

25. Composition catalytique selon la revendication 24 dans laquelle le rapport molaire de **B** et de l'agent activateur est de préférence compris entre 1/50 et 1/1, et de façon encore plus préférée entre 1/2 et 1/1, lorsque l'agent activateur est un acide de Lewis, un acide de Bronsted ou tout composé susceptible de réaliser l'hydrogénolyse d'une liaison métal-carbone de **B**, pour les composés organométalliques de formule générale **B**, dont au moins trois des quatre groupes R₁, R₂, R₃ et R₄ sont des radicaux hydrocarbyles, de préférence choisis parmi les groupes alkyles, cycloalkyles, aryles ou aralkyles.

26. Composition catalytique selon la revendication 24 dans laquelle le rapport molaire de **B** et de l'agent activateur est de préférence compris entre 1/2000 et 1/1, et de façon encore plus préférée entre 1/500 et 1/1, lorsque l'agent activateur est un agent alkylant.

27. Composition catalytique selon l'une des revendications 16 à 26 dans laquelle le rapport molaire de **A** sur **B** est compris entre 0,1/1 et 100/1, de préférence, entre 1/1 et 10/1, et de manière encore plus préférée entre 1/1 et 2/1.

28. Procédé d'oligomérisation ou de polymérisation des oléfines par réaction catalytique mettant en jeu une composition catalytique selon l'une des revendications 16 à 27.

## Patentansprüche

1. Metallörganiache Verbindung der Gruppe 4, geträgert auf einem Anion mittels einer Metall-Sauerstoff-Bindung, **dadurch gekennzeichnet, dass** sie der allgemeinen Formel I oder II entspricht: 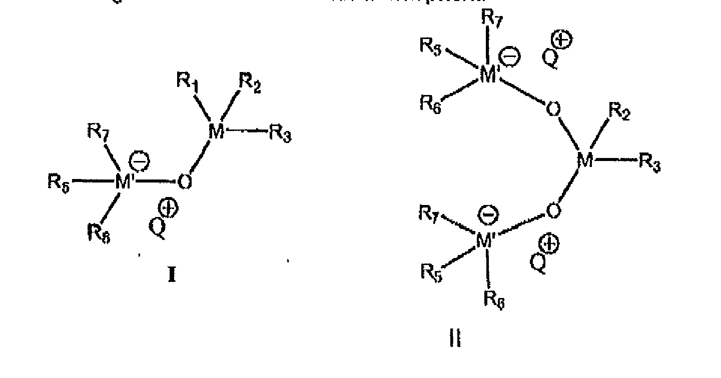 worin M für Titan, Zirconium oder Hafnium steht,
M' für Bor oder Aluminium steht,
R₁, R₂, R₃, gleich oder verschieden, für Halogenide oder organische Reste mit 1 bis 30 Kohlenstoffatomen stehen,
R₅, R₆, R₇, gleich oder verschieden, für organische Reste mit 1 bis 30 Kohlenstoffatomen stehen und Q⁺ für ein organisches oder anorganisches Kation steht,

2. Verbindung nach Anspruch 1, wobei die Gruppen R₆, R₆, R₇, gleich oder verschieden, für gesättigte oder ungesättigte Alkylreste, umfassend 1 bis 30 Kohlenstoffatome, Cycloalkylreste oder aromatische Reste, Arylreste oder Aralkylreste, gegebenenfalls substituierte Alkylreste, Hydrocarbylreste, worin ein oder mehrere VVasserstoffatome durch Halogenide ersetzt sind, oder Gruppen, die mindestens ein Heteroelement umfassen, ausgewählt aus den Elementen Sauerstoff, Stickstoff, Schwefel oder Silicium, Alcoxy-, Aryloxy- oder Amidgruppen, stehen.

3. Verbindung nach einem der Ansprüche 1 oder 2, wobei R₁, R₂, und R₃ für gegebenenfalls substituierte Alkyl-, Cycloalkyl- oder Arylgruppen, substituierte oder nicht substituierte Cyclopentadienyle, Alcoxy-, Aryloxy-, Amid-, Hydrido-, Carboxylat-, Oxalatgruppen, β-Diketiminate, Iminopyrrolide, Amidinate oder Boratabenzen stehen.

4. Verbindung nach einem der Ansprüche 1 bis 3, **dadurch gekennzeichnet, dass** sie der Formel I entspricht und dass mindestens zwei der drei Gruppen R₁, R₂ und R₃ Hydrocarbylreste sind, ausgewählt aus den Alkyl- , Cycloalkyl-, Aryl- oder Aralkylgruppen.

5. Verbindung nach einem der Ansprüche 1 bis 3, **dadurch gekennzeichnet, dass** sie der Formel I entspricht und dass mindestens zwei der drei Gruppen R₁, R₂ und R₃ Hydrocarbylreste sind, ausgewählt aus den Alkyl- , Cycloalkyl-, Aryl- oder Aralkylgruppen.

6. Verbindung nach einem der Ansprüche 1 bis 5, **dadurch gekennzeichnet, dass** das Kation Q⁺ einer der folgenden allgemeinen Formeln entspricht:
SX¹X²X³⁺ oder C(NX¹X²)(NX³X⁴)(NX⁵X⁶)⁺
oder NX¹X²X³⁺ oder PX¹X²X³⁺
oder X¹X²N=CX³X⁴⁺ oder X¹X²P=CX³X⁴⁺
worin X¹, X², X³, X⁴, X⁵ und X⁶, gleich oder verschieden, für Wasserstoff stehen, wobei bevorzugt ein einziger Substituent für Wasserstoff steht, oder für Hydrocarbylreste mit 1 bis 30 Kohlenstoffatomen.

7. Verbindung nach einem der Ansprüche 1 bis 5, **dadurch gekennzeichnet, dass** Q⁺ von stickstoff- und/oder phosphorhaltigen Heterocyclen abgeleitet ist, die 1, 2 oder 3 Stickstoffatome und/oder Phosphoratome umfassen, mit den folgenden allgemeinen Formeln: 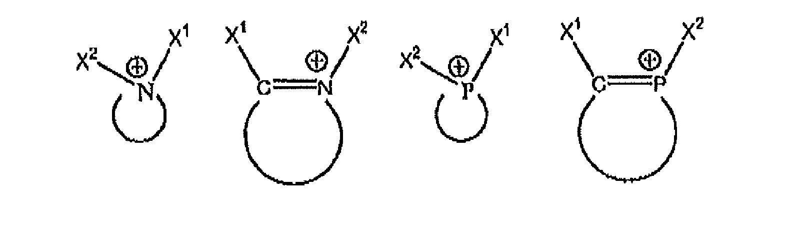 worin die Cyclen aus 4 bis 10 Atomen, bevorzugt aus 5 bis 6 Atomen bestehen, und X¹ und X², gleich oder verschieden, für Wasserstoff stehen, wobei bevorzugt ein einziger Substituent für Wasserstoff steht, oder für Hydrocarbylreste mit 1 bis 30 Kohlenstoffatomen.

8. Gemisch aus metallorganischen Verbindungen der Gruppe 4, geträgert auf einem Borat- oder Aluminatanion mittels mindestens einer kovalenten Metall-Sauerstoff-Bindung, die durch die Umsetzung mindestens einer Verbindung A, umfassend mindestens eine Hydroxygruppe, mit mindestens einer Verbindung B, gegebenenfalls in Gegenwart eines Lösemittels, erhalten wurde,
wobei die Verbindung A durch die folgende allgemeine Formel beschrieben wird: 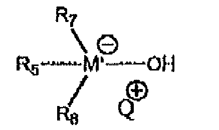 worin M' für Bor oder Aluminium steht, Q⁺ für ein organisches oder anorganische Kation steht, R₅, R₆, R₇, gleich oder verschieden, für organische Reste mit 1 bis 30 Kohlenstoffatomen stehen,
wobei die Verbindung B durch die folgende allgemeine Formel beschrieben wird: 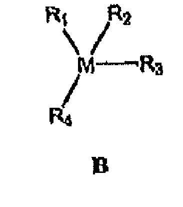 worin M für Titan, Zirconium oder Hafnium steht, R₁, R₂, R₃ und R₄, gleich oder verschieden, für Halogenide oder organische Reste mit 1 bis 30 Kohlenstoffatomen stehen.

9. Gemisch nach Anspruch 8, **dadurch gekennzeichnet dass** die Verbindung A ausgewählt ist aus Butyl-3-methyl-1-imididazollum-tris-pantafluorphenyl-hydroxyborat, 1-Butyl-2,3-dimethymimidazolium-tris-pentafluorphenyl-hydroxyborat, 1-Ethyl-3-methylimidazollum-tris-pentafluorphenyl-hydroxyborat, 1-Butyl-3-butylimidazolium-tris-pentafluorphonyl-hydroxyborat, N,N-Butylmethylpyrrolidinium-tris-pentafluorphenyl-hydroxyborat, Tetrabutylphosphonium-trispentafluorphenyl-hydroxyborat, Tetraphonylphosphonium-trispentafluorphenyl-hydroxyborat, Butyl-3-methyl-1-imididazolium-tris-pentafluorphenyl-hydroxyaluminat, Butyl-3-methyl-1-imididazollum-tris-phenyl-hydroxyborat, Butyl-3-methyl-1-imididazolium-tris-[3,5-bis(trifluormethyl)phenyl]-hydroxyborat.

10. Gemisch nach einem der Ansprüche 8 oder 9, **dadurch gekennzeichnet, dass** mindestens zwei Hydrocarbylreste R₁, R₂, R₃ und R₄, gleich oder verschleden, aus den Alkylen, Cycloalkylen, Arylen oder Aralkylen ausgewählt sind.

11. Gemisch nach einem der Ansprüche 8 bis 10, **dadurch gekennzeichnet, dass** die Verbindung B aus ZrCl₄, Zr(CH₂Ph)₄, Zr(CH₂CMe₃)₄, Zr(CH₂SiMe₃)₄, Zr(CH₂Ph)₃Cl, Zr(CH₂CMe₃)₃Cl, Zr(CH₂SiMe₃)₃Cl, Zr(CH₂Ph)₂Cl₂, Zr(CH₂CMe₃)₂Cl₂, Zr(CH₂SiMe₃)₂Cl₂, Zr(NMe₂)₄, Zr(NEt₂)₄, Zr(NMe₂)₂Cl₂, Zr(NEt₂)₂Cl₂ et Zr(N(SiMe₃)₂)₂Cl₂, Cp₂ZrMe₂, CpZrMe₃, Cp'ZrMe₃ (Cp*=Pentamethylcyclopentadienyl), HfCl₄, Cp₂HfMe₂, CpHfMe₃, Hf(CH₂Ph)₄, Hf(CH₂CMe₃)₄, Hf(CH₂SiMe₃)₄, Hf(CH₂Ph)₃Cl, Hf(CH₂CMe₃)₃Cl, Hf(CH₂SiMe₃)₃Cl, Hf(CH₂Ph)₂Cl₂, Hf(CH₂CMe₃)₂Cl₂, Hf(CH₂SiMe₃)₂Cl₂, H(NMe₂)₄, Hf(NEt₂)₄ und Hf(N(SiMe₃)₂Cl₂ ausgewählt ist.

12. Verfahren zur Synthese der Verbindung nach einem der Ansprüche 1 bis 7 oder dem Gemisch aus den Verbindungen nach einem der Ansprüche 8 bis 11, wobei eine Borat- oder Aluminatverbindung A, umfassend mindestens eine Hydroxygruppe, mit einer Verbindung B aus einem Übergangsmetall der Gruppe 4, gegebenenfalls In Gegenwart eines Lösemittels, umgesetzt wird, wobei die Verbindung A durch die folgende allgemeine Formel beschrieben wird 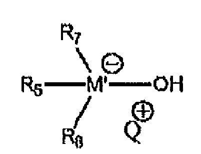 worin M' für Bor oder Aluminium steht, Q⁺ für ein organisches oder anorganische Kation steht, R₆, R₆, R₇, gleich oder verschieden, für organische Reste mit 1 bis 30 Kohlenstoffatomen stehen, und die Verbindung B durch die folgende allgemeine Formel beschrieben wird: 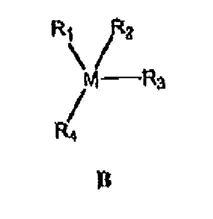 worin M für Titan, Zirconium oder Hafnium steht, R₁, R₂, R₃ und R₄, gleich oder verschieden, für Halogenide oder organische Reste mit 1 bis 30 Kohlenstoffatomen stehen.

13. Verfahren nach Anspruch 12, wobei das Lösemittel ein bevorzugt aprotisches, organisches Lösemittel ist, oder eine ionische Flüssigkeit und/oder deren Gemische.

14. Verfahren nach Anspruch 12 oder 13, wobei das Molverhältnis von A zu B im Bereich zwischen 0,1/1 und 100/1, bevorzugt zwischen 1/1 und 10/1, liegt.

15. Verfahren nach einem der Ansprüche 12 bis 14, wobei die Umsetzungstemperatur im Bereich zwischen -100°C und 150 °C, bevorzugt zwischen -78 °C und 60 °C liegt.

16. Katalytische Zusammensetzung, umfassend:
i) mindestens eine Verbindung mit der allgemeinen Formel I oder II 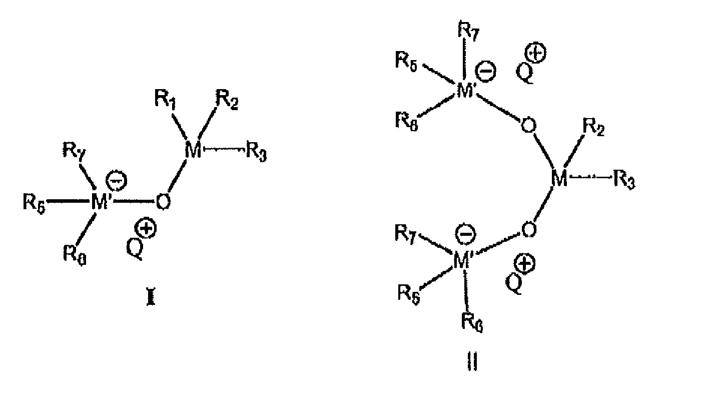 worin M für Titan, Zirconium oder Hafnium steht,
M' für Bor oder Aluminium steht,
R₁, R₂, R₃, gleich oder verschieden, für Halogenide oder organische Reste mit 1 bis 30 Kohlenstoffatomen stehen,
R₆, R₆, R₇, gleich oder verschieden, für organische Reste mit 1 bis 30 Kohlenstoffatomen stehen und Q⁺ für ein organisohes oder anorganisches Kation steht.
ii) mindestens ein Aktivierungsmittel
III) und optional ein Lösemittel.

17. Katalytische Zusammensetzung, die aus dem Kontakt zwischen;
i) mindestens einer Verbindung A vom Typ Borat oder Aluminat, umfassend mindestens eine Hydroxygruppe, beschrieben durch die allgemeine Formel 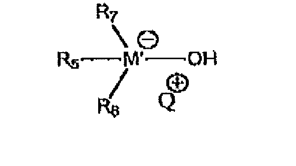 worin M' für Bor oder Aluminium steht, Q⁺ für ein organisches oder anorganische Kation steht, R₆, R₆, R₇, gleich oder verschieden, für organische Reste mit 1 bis 30 Kohlenstoffatomen stehen,
ii) mindestens einer Verbindung B aus einem Übergangsmetall der Gruppe 4, beschrieben durch die folgende allgemeine Formel: 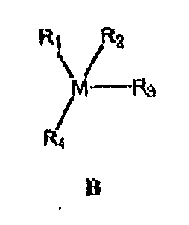 worin M für Titan, Zirkonium oder Hafnium steht, R₁, R₂, R₃ und R₄, gleich oder verschieden, für Halogenide oder organische Reste mit 1 bis 30 Kohlenstoffatomen stehen,
iii) mindestens einem Aktivierungsmittel
iv) optional einem Lösemittel resultiert.

18. Katalytische Zusammensetzung nach einem der Ansprüche 16 oder 17, wobei das Aktivierungsmittel eine Lewis-Säure, eine Brönsted-Säure, ein Alkyllerungsmittel oder jede Verbindung ist, die zur Hydrogenolyse einer Metall-Kohlenstoff-Bindung (M-C) befähigt ist.

19. Katalytische Zusammensetzung nach einem der Ansprüche 16 bis 18, wobei das Aktivierungsmittel ausgewählt ist aus Aluminoxanen, aluminiumorganischen Verbindungen, Aluminiumhalogeniden, Aluminaten, Boranen, Boraten, zinkorganischen Verbindungen, Wasserstoff oder deren Gemischen.

20. Katalytische Zusammensetzung nach einem der Ansprüche 16 bis 19, wobei das Lösemittel ausgewählt ist aus der Gruppe der organischen Lösemittel und den ionischen Flüssigkeiten oder deren Gemischen.

21. Katalytische Zusammensetzung nach einem der Ansprüche 16 bis 20, wobei das Molverhältnis von [I oder II] zum Aktivierungsmittel im Bereich zwischen 1/10.000 und 100/1, bevorzugt zwischen 1/500 und 1/1 liegt.

22. Katalytische Zusammensetzung nach Anspruch 21, wobei das Molverhältnis von [I oder II] zum Aktivierungsmittel im Bereich zwischen und bevorzugt zwischen 1/60 und 1/1, und noch stärker bevorzugt zwischen 1/2 und 1/1 liegt, wenn das Aktivierungsmittel eine Lewis-Säure, eine Brönsted-Säure oder jede Verbindung ist, die zur Ausführung der Hydrogenolyse einer Metall-Kohlenstoff-Bindung von [I oder M]₁ für die metallorganischen Verbindungen der allgemeinen Formel I₁ befähigt ist, von denen mindestens zwei der drei Gruppen R₁, R₂ und R₃ Hydrocarbylreste sind, und für die metallorganischen Verbindungen mit der allgemeinen Formel M, von denen die beiden Gruppen R₂ und R₃ Hydrocarbylgruppen sind, wobei die Hydrocarbylreste bevorzugt Alkyl-, Cyoloalkyl-, Aryl- oder Aralkylgruppen sind.

23. Katalytische Zusammensetzung nach Anspruch 21, wobei das Molverhältnis von [I oder II] zu dem Aktivierungsmittel bevorzugt im Bereich zwischen 1/2.000 und 1/1, und noch stärker bevorzugt zwischen 1/500 und 1/1 liegt, wenn das Aktivterungsmittel ein Alkylierungsmittel ist.

24. Katalytische Zusammensetzung nach einem der Ansprüche 16 bis 23, wobei das Molverhältnis von B zum Aktivietungsmittel im Bereich zwischen 1/10.000 und 100/1, bevorzugt zwischen 1/500 und 1/1 liegt.

25. Katalytische Zusammensetzung nach Anspruch 24, wobei das Molverhältnis von B zum Aktivierungsmittel bevorzugt im Bereich zwischen 1/50 und 1/1, und noch stärker bevorzugt zwischen 1/2 und 1/1 liegt, wenn das Aktivierungsmittel eine Lewis-Säure, eine Brönsted-Säure oder jede Verbindung ist, die zur Ausführung der Hydrogenolyse einer Metall-Kohlenstoff-Bindung von B₁ für die metallorganischen Verbindungen der allgemeinen Formel B befähigt ist, von denen mindestens drei der vier Gruppen R₁, R₂, R₃ und R₄ Hydrocarbylreste sind, bevorzugt ausgewählt aus den Alkyl-, Cycloalkyl-, Aryl- oder Aralkylgruppen.

26. Katalytische Zusammensetzung nach Anspruch 24, wobei das Molverhältnis von B zu dem Aktivierungsmittel bevorzugt im Bereich zwischen 1/2.000 und 1/1, und noch stärker bevorzugt zwischen 1/500 und 1/1 liegt, wenn das Aktivierungsmittel ein Alkyllertingsmittel ist.

27. Katalytische Zusammensetzung nach einem der Ansprüche 16 bis 26, wobei das Molverhältnis von A zu B im Bereich zwischen 0,1/1 und 100/1, bevorzugt zwischen 1/1 und 10/1 und noch stärker bevorzugt zwischen 1/1 und 2/1 liegt.

28. Verfahren zur Oligomerisation oder Polymerisation von Olefinen durch Katalytische Umsetzung, bei der eine katalytische Zusammensetzung nach einem der Ansprüche 16 bis 27 eingesetzt wird.

## Claims

1. A group 4 organometallic compound supported on anions by means of a covalent metal-oxygen bond, **characterized in that** it meets general formula I or II: 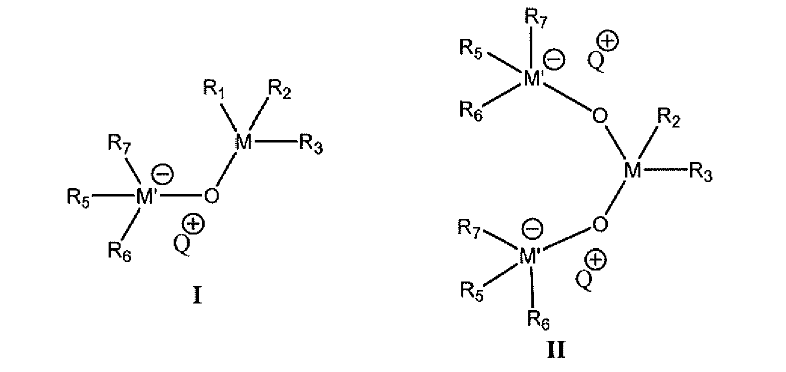 wherein:
M represents titanium, zirconium or hafnium,
M' represents boron or aluminium,
R₁, R₂, R₃, identical or different, represent halogenides or organic radicals having 1 to 30 carbon atoms,
R₅, R₆, R₇, identical or different, represent organic radicals having 1 to 30 carbon atoms, and
Q⁺ represents an organic or inorganic cation.

2. A compound as claimed in claim 1, wherein groups R₅, R₆, R₇, identical or different, represent alkyl radicals having 1 to 30 carbon atoms, saturated or non-saturated, cycloalkyl or aromatic groups, aryl or aralkyl groups, possibly substituted, hydrocarbyl radicals wherein one or more hydrogen atoms are replaced by halogenides or groups comprising at least one heteroelement selected from among the elements oxygen, nitrogen, sulfur or silicon of the alkoxy, aryloxy or amidide groups.

3. A compound as claimed in any one of claims 1 or 2, wherein R₁, R₂, R₃ represent alkyl, cycloalkyl or aryl groups, possibly substituted, cyclopentadienyls, substituted or not, alkoxy, aryloxy, amidide, hydrido, carboxylate, oxalate, β-diketiminate, iminopyrrolide, amidinate or boratabenzene groups.

4. A compound as claimed in any one of claims 1 to 3, **characterized in that** it meets formula I and **in that** at least two of the three groups R₁, R₂, R₃ are hydrocarbyl radicals selected from among the alkyl, cycloalkyl, aryl or aralkyl groups.

5. A compound as claimed in any one of claims 1 to 3, **characterized in that** it meets formula II and **in that** the two groups R₂ and R₃ are hydrocarbyl radicals selected from among the alkyl, cycloalkyl, aryl or aralkyl groups.

6. A compound as claimed in any one of claims 1 to 5, **characterized in that** cation Q⁺ meets one of the following general formulas:
SX¹X²X³⁺ or C(NX¹X²)(NX³X⁴)(NX⁵X⁶)⁺, or
NX¹X²X³⁺ or PX¹X²X³⁺ or
X¹X²N=CX³X⁴⁺ or X¹X²P=CX³X⁴⁺
wherein X¹, X², X³, X⁴, X⁵ and X⁶, identical or different, represent hydrogen, preferably a single substituent represents hydrogen, or hydrocarbyl radicals having 1 to 30 carbon atoms.

7. A compound as claimed in any one of claims 1 to 5, **characterized in that** Q⁺ is derived from nitrogen-containing and/or phosphorus-containing heterocycles comprising 1, 2 or 3 atoms of nitrogen and/or phosphorus, of general formulas: 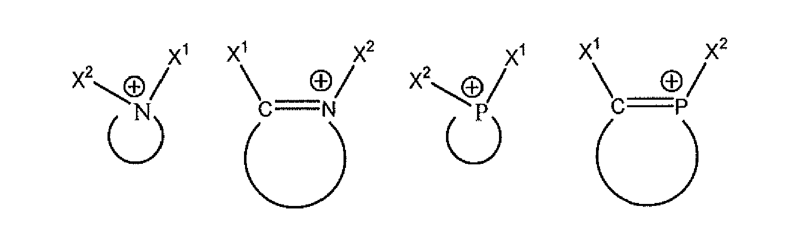 wherein the cycles consist of 4 to 10 atoms, preferably 5 to 6 atoms, and X¹ and X², identical or different, represent hydrogen, preferably a single substituent represents hydrogen, or hydrocarbyl radicals having 1 to 30 carbon atoms.

8. A mixture of group 4 organometallic compounds supported on borate or aluminate anions by means of at least one covalent metal-oxygen bond, obtained by reaction between at least one compound A comprising at least one hydroxy group and at least one compound B, optionally in the presence of a solvent,
compound A being described by the general formula as follows: 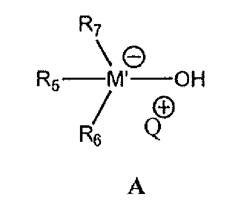 wherein M' represents boron or aluminium, Q⁺ represents an organic or inorganic cation, R₅, R₆ and R₇, identical or different, represent organic radicals having 1 to 30 carbon atoms,
compound B being described by the general formula as follows: 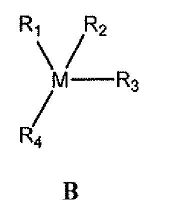 wherein M represents titanium, zirconium or hafnium, R₁, R₂, R₃ and R₄, identical or different, represent halogenides or organic radicals having 1 to 30 carbon atoms.

9. A mixture as claimed in claim 8, **characterized in that** compound A is selected from among butyl-3-methyl-1-imididazolium tris-pentafluorophenyl-hydroxyborate, 1-butyl-2,3-dimethymimidazolium tris-pentafluorophenyl-hydroxyborate, 1-ethyl-3-methylimidazolium tris-pentafluorophenyl-hydroxyborate, 1-butyl-3-butylimidazolium tris-pentafluorophenyl-hydroxyborate, N, N-butylmethylpyrrolidinium tris-pentafluoro-phenyl-hydroxyborate, tetrabutylphosphonium tris-pentafluorophenyl-hydroxyborate, tetraphenylphosphonium tris-pentafluorophenyl-hydroxyborate, butyl-3-methyl-1-imididazolium tris-pentafluorophenyl-hydroxyaluminate, butyl-3-methyl-1-imidid-azolium tris-phenyl-hydroxyborate, butyl-3-methyl-1-imididazolium tris-[3,5-bis(tri-fluoromethyl)phenyl]-hydroxyborate.

10. A mixture as claimed in any one of claims 8 or 9, **characterized in that** at least two hydrocarbyl radicals R₁, R₂, R₃ and R₄, identical or different, are selected from among the alkyl, cycloalkyl, aryl or aralkyl groups.

11. A mixture as claimed in any one of claims 8 to 10, **characterized in that** compound B is selected from among ZrCl₄, Zr(CH₂Ph)₄, Zr(CH₂CMe₃)₄, Zr(CH₂SiMe₃)₄, Zr(CH₂Ph)₃Cl, Zr(CH₂CMe₃)₃Cl, Zr(CH₂SiMe₃)₃Cl, Zr(CH₂Ph)₂Cl₂, Zr(CH₂CMe₃)₂Cl₂, Zr(CH₂SiMe₃)₂Cl₂, Zr(NMe₂)₄, Zr(NEt₂)₄, Zr(NMe₂)₂Cl₂, Zr(NEt₂)₂Cl₂ and Zr(N(SiMe₃)₂)₂Cl₂, Cp₂ZrMe₂, CpZrMe₃, Cp*ZrMe₃ (Cp*=penta-methylcyclopentadienyl), HfCl₄, Cp₂HfMe₂, CpHfMe₃, Hf(CH₂Ph)₄, Hf(CH₂CMe₃)₄, Hf(CH₂SiMe₃)₄, Hf(CH₂Ph)₃Cl, Hf(CH₂CMe₃)₃Cl, Hf(CH₂SiMe₃)₃Cl, Hf(CH₂Ph)₂Cl₂, Hf(CH₂CMe₃)₂Cl₂, Hf(CH₂SiMe₃)₂Cl₂, Hf(NMe₂)₄, Hf(NEt₂)₄ and Hf(N(SiMe₃)₂)₂Cl₂.

12. A method for synthesis of a compound as claimed in any one of claims 1 to 7 or of a mixture of compounds as claimed in any one of claims 8 to 11, wherein a borate or aluminate compound **A** comprising at least one hydroxy group is reacted with a compound **B** of a group 4 transition metal, optionally in the presence of a solvent, wherein compound A is described by the general formula: 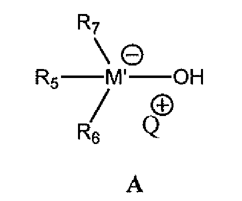 wherein M' represents boron or aluminium, Q⁺ represents an organic or inorganic cation, R₅, R₆ and R₇, identical or different, represent organic radicals having 1 to 30 carbon atoms, and compound B is described by the general formula: 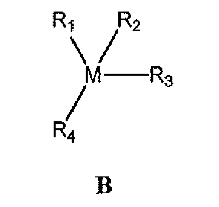 wherein M represents titanium, zirconium or hafnium, R₁, R₂, R₃ and R₄, identical or different, represent halogenides or organic radicals having 1 to 30 carbon atoms.

13. A method as claimed in claim 12, wherein the solvent is an organic solvent, preferably aprotic, or an ionic liquid, and/or mixtures thereof.

14. A method as claimed in claim 12 or 13, wherein the molar ratio of A to B ranges between 0.1/1 and 100/1, preferably between 1/1 and 10/1.

15. A method as claimed in any one of claims 12 to 14, wherein the reaction temperature ranges between -100°C and 150°C, preferably between -78°C and 50°C.

16. A catalytic composition comprising:
i) at least one compound of general formula I or II 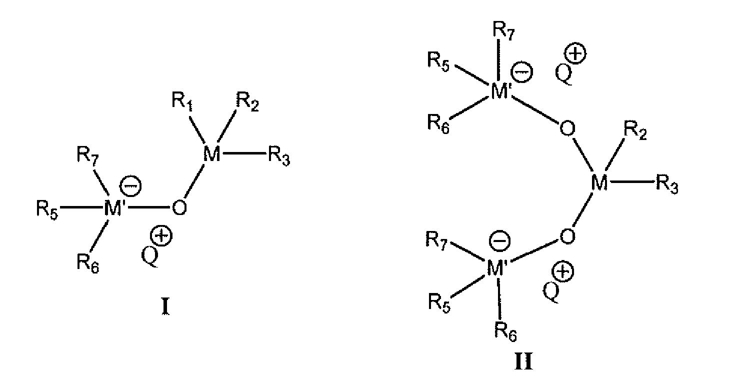 wherein:
M represents titanium, zirconium or hafnium,
M' represents boron or aluminium,
R₁, R₂, R₃, identical or different, represent halogenides or organic radicals having 1 to 30 carbon atoms,
R₅, R₆, R₇, identical or different, represent organic radicals having 1 to 30 carbon atoms, and
Q⁺ represents an organic or inorganic cation,
ii) at least one activator agent, and
iii) optionally a solvent.

17. A catalytic composition resulting from contacting:
i) at least one compound A of borate or aluminate type comprising at least one hydroxy group, described by the general formula: 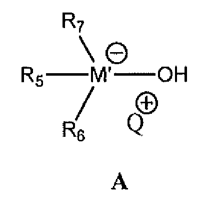 wherein M' represents boron or aluminium, Q⁺ represents an organic or inorganic cation, R₅, R₆ and R₇, identical or different, represent organic radicals having 1 to 30 carbon atoms,
ii) at least one compound B of a group 4 transition metal described by the general formula: 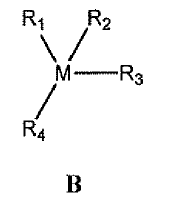 wherein M represents titanium, zirconium or hafnium, R₁, R₂, R₃ and R₄, identical or different, represent halogenides or organic radicals having 1 to 30 carbon atoms,
iii) at least one activator agent,
iv) optionally a solvent.

18. A catalytic composition as claimed in any one of claims 16 or 17, wherein the activator agent is a Lewis acid, a Bronsted acid, an alkylating agent or any compound likely to hydrogenolyze a metal-carbon bond (M-C).

19. A catalytic composition as claimed in any one of claims 16 to 18, wherein the activator agent is selected from among aluminoxanes, organo-aluminiums, aluminium halogenides, aluminates, boranes, borates, organo-zincs, hydrogen or mixtures thereof.

20. A catalytic composition as claimed in any one of claims 16 to 19, wherein the solvent is selected from the group of organic solvents and ionic liquids or mixtures thereof.

21. A catalytic composition as claimed in any one of claims 16 to 20, wherein the molar ratio of [I or II] to activator agent ranges between 1/10,000 and 100/1, preferably between 1/500 and 1/1.

22. A catalytic composition as claimed in claim 21, wherein the molar ratio of [I or II] to activator agent preferably ranges between 1/50 and 1/1, more preferably between 1/2 and 1/1 when the activator agent is a Lewis acid, a Bronsted acid or any compound likely to hydrogenolyze a metal-carbon bond of [I or II], for the organometallic compounds of general formula I, of which at least two of the three groups R₁, R₂ and R₃ are hydrocarbyl radicals, and for the organometallic compounds of general formula II, of which the two groups R₂ and R₃ are hydrocarbyl groups, the hydrocarbyl radicals being preferably alkyl, cycloalkyl, aryl or aralkyl groups.

23. A catalytic composition as claimed in claim 21, wherein the molar ratio of [I or II] to activator agent preferably ranges between 1/2000 and 1/1, more preferably between 1/500 and 1/1 when the activator agent is an alkylating agent.

24. A catalytic composition as claimed in any one of claims 16 to 23, wherein the molar ratio of B to activator agent ranges between 1/10,000 and 100/1, preferably between 1/500 and 1/1.

25. A catalytic composition as claimed in claim 24, wherein the molar ratio of **B** to activator agent preferably ranges between 1/50 and 1/1, more preferably between 1/2 and 1/1 when the activator agent is a Lewis acid, a Bronsted acid or any compound likely to hydrogenolyze a metal-carbon bond of **B**, for the organometallic compounds of general formula **B**, of which at least three of the four groups R₁, R₂, R₃ and R₄ are hydrocarbyl radicals, preferably selected from among the alkyl, cycloalkyl, aryl or aralkyl groups.

26. A catalytic composition as claimed in claim 24, wherein the molar ratio of **B** to activator agent preferably ranges between 1/2000 and 1/1, more preferably between 1/500 and 1/1 when the activator agent is an alkylating agent.

27. A catalytic composition as claimed in any one of claims 16 to 26, wherein the molar ratio of **A** to **B** ranges between 0.1/1 and 100/1, preferably between 1/1 and 10/1, and more preferably between 1/1 and 2/1.

28. A method for oligomerization or polymerization of olefins by catalytic reaction involving a catalytic composition as claimed in any one of claims 16 to 27.
